# EUROPEAN PATENT SPECIFICATION

(11) **EP 1 166 904 B1**
(45) Date of publication and mention of the grant of the patent: **15.06.2016**
(21) Application number: 99972133.5
(22) Date of filing: 16.11.1999
(51) Int. Cl.: B09C 1/08, B09C 1/00

(54) **METHOD FOR DETOXIFICATION TREATMENT OF SOIL**
METHODE ZUR ENTGIFTUNG VON BÖDEN
PROCEDE DE TRAITEMENT DE DETOXICATION DE SOLS

(30) Priority: 17.11.1998 JP 32674598; 21.12.1998 JP 36209198; 23.02.1999 JP 4505099
(43) Date of publication of application: 02.01.2002
(73) Proprietor: Dowa Eco-System Co., Ltd., Tokyo 101-0021 (JP)
(72) Inventor: KIMURA, Toshimune, Dowa Mining Co. Ltd., Chiyoda-ku, Tokyo 100-8282 (JP); SHIRATORI, Toshikazu, Dowa Mining Co. Ltd., Chiyoda-ku, Tokyo 100-8282 (JP); KAWAKAMI, Satoshi, Dowa Mining Co. Ltd., Chiyoda-ku, Tokyo 100-8282 (JP); ITO, Hiroyuki, Dowa Mining Co. Ltd., Chiyoda-ku, Tokyo 100-8282 (JP); TOMOGUCHI, Masaru, Dowa Mining Co. Ltd., Chiyoda-ku, Tokyo 100-8282 (JP); KAKUSHO, Tomonari, Dowa Mining Co. Ltd., Yokohama-shi, Kanagawa 236-0046 (JP)
(74) Representative: Roshardt, Werner Alfred
(86) International application number: PCT/JP1999/006395
(87) International publication number: WO 2000/029137

(56) References cited:
- JP-A- 10 071 386
- JP-A- 10 263 522
- JP-A- 11 235 577
- US-A- 5 616 253

## Description

### Technical Field

This invention relates to the technology of cleaning soils contaminated by halogenated organic compounds.

### Background Art

In semiconductor plants and metal working shops, trichloroethylene and other chlorinated organic compounds are heavily used as degreasing solvents and thereafter discharged or dumped. The accumulation of such chlorinated organic compounds contaminates soils or groundwater to become an impediment in subsequent efforts to make effective use of the former site of a plant or develop the land in the surrounding area. In addition, the contamination of groundwater by the accumulated chlorinated organic compounds poses serious social problems as exemplified by the difficulty in making effective use of the contaminated groundwater.

Methods of treating the thus contaminated groundwater with iron-base metal reducing agents to decompose the contaminants so that they are harmless described in many patents including, for example, Examined Japanese Patent Publication Nos. 49158/1990, 49798/1990, Japanese Patent No. 2636171, Japanese Patent Domestic Announcement Nos. 501520/1993 and 506631/1994.

In the method described in Examined Japanese Patent Publication No. 49158/1990, water of interest that contains difficult-to-decompose halogenated hydrocarbons is adjusted to pH of 6.5 - 9.5 and then reduced with iron or other base metals as reducing agents; in the method described in Examined Japanese Patent Publication No. 49798/1990, prior to remediating water of interest containing organic compounds with metallic reducing agents, it is adjusted to pH of 6.5 or higher and treated with a reducing agent so that its redox potential is sufficiently lowered to remove the oxidizing substance; in the method described in Japanese Patent No. 2636171, contaminated water containing halogenated organic compounds is supplied with hydrogen to remove the dissolved oxygen and thereafter subjected to a reducing treatment in contact with a carrier substance such as activated charcoal bearing iron or other metals.

The method described in Japanese Domestic Patent Announcement No. 501520/1993 is one of cleaning groundwater contaminated by halogenated organic pollutants and characterized by decomposing the contaminants by passing the contaminated groundwater through a permeable subsurface layer of iron or other metallic particles in a non-oxygen supplied environment. Similarly, the method described in Japanese Domestic Patent Announcement No. 506631/1994 is one of cleaning groundwater contaminated by halogenated organic pollutants, except that the contaminants are adsorbed and decomposed by passing the contaminated groundwater through a permeable subsurface layer that consists of an adsorbent such as activated charcoal and particulate metals such as iron filings.

Other methods that can be applied to contaminated groundwater include not only soil vapor extraction (SVE) technology in which the contaminated groundwater is vacuum extracted from the soil and remediated but also pump and treat (P&T) technology. Other methods that are known to be applicable to soils include thermal desorption and decomposition techniques that remediate excavated soils by thermal treatments. Also known are methods of bioremediation that use microorganisms to clean soils or groundwater by decomposing the pollutants.

However, the conventional methods described above have various problems of their own. The methods described in Examined Japanese Patent Publication Nos. 49158/1990 and 49798/1990 and Japanese Patent No. 2636171 are all intended to treat process water or the wastewater from factories and in order to treat contaminated groundwater, the cumbersome operation of pumping it must first be performed and, what is more, it need be subjected to pH adjustment and the removal of dissolved oxygen by some suitable means such as the supply of another reducing substance or hydrogen gas. Having these limitations, the methods are difficult to apply to the *in-situ* treatment of contaminated soils or groundwater and there are also some economic disadvantages such as the need to support less reactive iron-based reducing agents on activated charcoal and other carriers.

The methods described in Japanese Domestic Patent Announcement Nos. 501520/1993 and 506631/1994 may be classified as methods for *in-situ* treatment of groundwater which are primarily intended to ensure that the stream of groundwater flowing in a contaminated region will not foul the downstream region; in other words, they are not intended to remediate the contaminated region per se. There are also some economic disadvantages; for example, it is necessary to use a metallic reductant in combination with an adsorbent in the form of activated charcoal and, in addition, the iron layer is clogged by the iron carbonate (FeCO₃) resulting from the reaction with the carbonate ions in the groundwater and need be replaced periodically.

The document JP-A-10 263 522 disclosed a method for remediation of contaminated soils in accordance with the preamble of claim 1.

Thus, the conventional techniques for remediating the soils contaminated by chlorinated organic compounds and the contaminated water in such soils have had the following problems.
(1) When extracting or pumping contaminated soil gases or groundwater by soil vapor extraction (SVE), pump and treat (P&T) and other methods, activated charcoal and decomposing agents are used to remove and degrade contaminants in soil gases and extracted water; to this end, suitable facilities have to be installed on the ground so that the contaminants resulting from the extraction and pump operations are rendered harmless but these are costly separate steps. In addition, the technologies are not intended to clean the soil per se and, hence, are incapable of eliminating the already mentioned obstacles to land development. In short, these technologies are not suitable for achieving the intended soil remediation.
(2) The methods of cleaning groundwater using iron and other metal based reducing agents are exclusively directed to groundwater; they may be able to prevent the dissipation of contaminated groundwater but certainly not intended to clean contaminated soils per se; therefore, these methods are not applicable to the cleaning of unsaturated zones above the groundwater level or excavated soils; hence, they are also unsuitable for achieving the intended soil remediation.
   In order to increase the soil permeability to groundwater and prevent the aforementioned problem of clogging, the methods use comparatively large iron particles but this not only deteriorates their reactivity but also increases the amount of their use, thereby posing a cost problem.
   The other methods are also directed to contaminated water and their applicability is limited to the case of remediating contaminants such as chlorinated organic compounds in a water-filled environment using iron and other metal based reducing agents.
(3) In the methods that thermally decompose excavated soils at elevated temperatures, heavy facilities are needed to perform heat treatment of soils and, what is more, the soil particles are themselves decomposed by heat and the capabilities of soil such as supporting structures and serving as the habitat of living organisms are considerably compromised; this makes a second use of the treated soil difficult.
(4) The method of bioremediation is not applicable to all kinds of soils since different soils have different characteristics. Even if this is possible, the microbial action is slow in pushing the reaction forward and, hence, a prolonged treatment is required.

### Disclosure of the Invention

Therefore, the purpose of the present invention is to provide a method for soil remediation of contaminated soils that is applicable to a broad range of soils including not only the soil in a saturated zone below the groundwater level but also the soil in an unsaturated zone above the groundwater level which is not filled with water as well as excavated soils and by which soils contaminated by halogenated, say, chlorinated organic compounds can be treated such that the contaminants are degraded in a short period and at ordinary temperatures using reductants solely composed of comparatively cheap iron materials.

The embodiment of the present invention provides a method for remediation of contaminated soils in accordance with claim 1, by which a soil with a water content of at least 5% that is located either deeper or shallower than the groundwater level or which has been excavated and that are contaminated by a halogenated organic compound is cleaned by allowing an iron powder to be present either within or near said soil so that it degrades said halogenated organic compound.

This method of soil remediation can be practiced in a first manner by selecting as said iron powder a spongy iron powder that contains at least 0.1 wt% of carbon and which has a specific surface area of at least 500 cm²/g with such a particle size that at least 50% of the particles pass a sieve of 150 µm and by allowing 0.1 - 10 wt% of such spongy iron powder to be present either within or near said soil.

The method of soil remediation can also be practiced in a second manner by selecting as said iron powder a copper-containing iron powder , which is prepared by recovering a precipitate resulting from mixing an iron powder in an aqueous solution of copper sulfate, has a copper content in the range of 0.1 - 20 wt% and by allowing 0.1 - 10 wt% of such copper-containing iron powder to be present either within or near said soil.

In a preferred second embodiment, the present invention provides a method for remediation of contaminated soils in which a reducing substance that is water-soluble and which exhibits weak acidity in water is added together with said iron powder as it is allowed to be present either within or near said soil.

Preferably, said reducing substance that is water-soluble and which exhibits weak acidity in water is selected from among inorganic compounds excepting those containing nitrogen and phosphorus and added to said soil in an amount of at least 100 ppm.

It is also preferred that said reducing substance that is water-soluble and which exhibits weak acidity in water is at least one compound selected from the group consisting of sodium hydrogensulfite, sodium disulfite and sodium dithionite.

Preferably, said halogenated organic compound is degraded at a pH in the range of 3.5 - 9.

In a preferred third embodiment, the present invention provides a method for remediation of contaminated soils in which when said halogenated organic compound is degraded, heat is imparted to said soil so that it has a higher temperature than its natural temperature.

Heat may be imparted to said soil by utilizing at least one means selected from among the heat of chemical reaction of an inorganic compound, a heating medium and Joule's heat.

Said halogenated organic compound is at least one member of the group consisting of dichloromethane, chloroform, carbon tetrachloride, 1,1-dichloroethane, 1,2-dichloroethane, methylchloroform, 1,1,2-trichloroethane, 1,1,1,2-tetrachloroethane, 1,1,2,2-tetrachloroethane, 1,1-dichloroethylene, cis-1,2-dichloroethylene, trans-1,2-dichloroethylene, trichloro-ethylene, tetrachloroethylene, 1,3-dichloropropene and 1,3-dichloropropane.

In a preferred fourth embodiment, the present invention provides a method for remediation of contaminated soils in which either said iron powder or said copper-containing iron powder or both are uniformly mixed with said soil.

In a preferred fifth embodiment, the present invention provides a method for remediation of contaminated soils in which either said iron powder or said copper-containing iron powder or both are not mixed uniformly with said soil but are dispersed in the ground near said soil.

In one example of this preferred fifth embodiment, either said iron powder or said copper-containing iron powder or both are dispersed by a means of applying a sheet-like phase in which either said iron powder or said copper-containing iron powder or both are mixed with the soil under agitation (said sheet-like phase may be parallel, normal or at an angle to the ground surface).

In another example of the preferred fifth embodiment, either said iron powder or said copper-containing iron powder or both are dispersed by a means of applying a columnar phase in which either said iron powder or said copper-containing iron powder or both are mixed with the soil under agitation (said columnar phase may be parallel, normal or at an angle to the ground surface).

In yet another example of the preferred fifth embodiment, either said iron powder or said copper-containing powder or both are dispersed by a means of applying in combination a sheet-like phase in which either said iron powder or said copper-containing iron powder or both are mixed with the soil under agitation and a columnar phase in which said iron powder or said copper-containing iron powder or both are mixed with the soil under agitation.

In still another example of the preferred fifth embodiment, said sheet-like phase is applied in a plurality of layers.

In a desired case, said sheet-like phase and said columnar phase are each applied in a plurality of locations that are spaced apart by a distance of 0.05 - 5 m.

In a preferred sixth embodiment, the present invention relates to a method for remediation of contaminated soils by which a soil with a water content of at least 5% that is located either deeper or shallower than the groundwater level and that is contaminated by a halogenated organic compound is cleaned in *situ* by blowing a gas into or near a contaminated area so that said contaminant is moved at an accelerated rate and degraded with an iron powder mixed and agitated phase that is preliminarily placed in or near the contaminated area.

Said gas preferably has a lower oxygen content than air and, more preferably, it is nitrogen gas with a purity of at least 98%.

In a preferred seventh embodiment, the present invention relates to a method for remediation of contaminated soils by which a soil with a water content of at least 5% that is located either deeper or shallower than the groundwater level and that is contaminated by a halogenated organic compound is cleaned *in situ* in a saturated zone by blowing a gas into or near a contaminated area in a saturated zone so that said contaminant is moved at an accelerated rate and degraded with an iron powder mixed and agitated phase that is preliminarily placed in or near the contaminated area.

In one example of the preferred sixth or seventh embodiment, said iron powder mixed and agitated phase consists of at least one single layer in a thickness of at least 1 cm.

In another example of the preferred sixth or seventh embodiment, said iron powder mixed and agitated phase consists of at least one single column in a diameter of at least 1 cm.

In yet another example of the preferred sixth or seventh embodiment, said iron powder mixed and agitated phase consists of at least one single layer in a thickness of at least 1 cm and at least one single column in a diameter of at least 1 cm.

### Brief Description of the Drawings

Fig. 1 is a graph showing the time-dependent changes in the concentration of trichloroethylene that occurred in Example 8 and Comparative Example 3;
Fig. 2 is a graph showing the time-dependent change in the concentration of trichloroethylene that occurred in Example 10;
Fig. 3 is a graph showing the time-dependent change in the concentration of trichloroethylene that occurred in Example 11;
Fig. 4 is a graph showing the time-dependent change in the concentration of trichloroethylene that occurred in Example 12;
Fig. 5 is a graph showing the time-dependent changes in the concentration of trichloroethylene that occurred in Reference Example 1;
Fig. 6 is a graph showing the time-dependent changes in the concentration of trichloroethylene that occurred in Reference Example 2;
Fig. 7 is a schematic section illustrating how a test was conducted by the present inventors in Example 13;
Fig. 8 is a schematic section illustrating how another test was conducted by the present inventors in Example 14;
Fig. 9 is a schematic section showing how yet another test was conducted by the present inventors;
Fig. 10 is a schematic section showing how still another test was conducted by the present inventors;
Fig. 11 is a graph showing the results of a column test conducted in Example 16 to investigate how the TCE concentration at varying depths from the surface layer of a trichloroethylene contaminated soil changed over time when a layer of iron powder was formed on the soil surface;
Fig. 12 is a graph showing the results of a TCE elution test on the contaminated soil as a function of depth from the surface layer before and after the column test referred to Fig. 11;
Fig. 13 is a schematic section showing the state of underground contamination by chlorinated organic compounds in Example 17 and also showing how the cleaning method of the present invention was applied;
Fig. 14 is a schematic plan view of Fig. 13 showing how the method of the invention was applied;
Fig. 15 is a schematic section showing the soil composition in the columns used in Example 18;
Fig. 16(1) is a schematic section corresponding to Fig. 1 which shows the soil composition in a column that was used in Comparative Example h where a layer of iron powder was present but no gas was blown in;
Fig. 16(2) is a schematic section corresponding to Fig. 13 which shows the soil composition in a column that was used in Comparative Example i where no layer of iron powder was present, nor was a gas blown in; and
Fig. 16(3) is a schematic section corresponding to Fig. 13 which shows the soil composition in a column that was used in Comparative Example j where no layer of iron powder was present but nitrogen was blown in.

### Best Mode for Carrying Out the Invention

The soils to be cleaned by the present invention are those contaminated by chlorinated organic compounds including dichloromethane, chloroform, carbon tetrachloride, 1,1-dichloroethane, 1,2-dichloroethane, methylchloroform, 1,1,2-trichloroethane, 1,1,1,2-tetrachloroethane, 1,1,2,2-tetrachloroethane, 1,1-dichloroethylene, cis-1,2-dichloro-ethylene, trans-1,2-dichloroethylene, trichloroethylene, tetrachloroethylene, 1,3-dichloropropene and 1,3-dichloropropane and the invention is characterized by degrading these chlorinated organic compounds to become harmless.

The spongy iron powders to be used in cleaning contaminated soils have a carbon content of at least 0.1 wt% and may be made of almost all species known as plain steels and plain cast irons. A spongy iron powder having a carbon content less than 0.1 wt% is impracticably low in the rate of degrading contaminants. The suitable spongy iron powder should be adjusted to have such a particle size that at least 50 wt% of the particles pass a sieve having openings of 150 µm. Coarser particles of spongy iron are low not only in the rate of degrading contaminants but also in the efficiency of utilization of the iron powder and an uneconomically excessive amount of the iron powder has to be used.

With a view to increasing the area of contact with contaminants, thereby enhancing the reaction efficiency, the iron powders to be added to soils are a spongy iron powder and/or copper-containing iron powder that have a specific surface area of at least 500 cm²/g, desirably at least 2000 cm²/g. At the same time, in order to enhance the reactivity with contaminants, the iron powder desirably has low crystal growth rate, hopefully having a pearlitic crystal structure.

The above-mentioned copper-containing iron powder is easily prepared by recovering a precipitate resulting from mixing an iron powder in an aqueous solution of copper sulfate. The copper content of the copper-containing iron powder is within the range of 0.1 - 20 wt%. If the copper content is 0.1 wt% or more, a marked advantage is expected to result as for the rate of degradation of chlorinated organic compounds. If the copper content exceeds 20 wt%, the cost of the copper-containing iron powder is increased to an uneconomical level.

The iron powder is added to soils or groundwater in an amount of 0.1 - 10 wt% of wet soil weight. If the addition is less than 0.1 wt%, the rate of degradation of contaminants drops considerably; adding more than 10 wt% of the iron powder is economically disadvantageous.

In the case of *in-situ* treatment, the iron powder may be added to soils either by spraying into the ground with the aid of a high-pressure medium such as compressed air or a water jet or by mechanical excavating and mixing with earth-moving machines used in land improving work. For excavation, mixing machines such as a kneader, a mixer and a blender may be employed. If the excavated soil is clayey or otherwise low in fluidity, an impact mixing method is desirably applied by a multi-shaft rotating hammer.

The iron particles are gradually deactivated to lose activity as their surfaces are oxidized; hence, in order to maintain the ability of the iron powder to degrade contaminants, care must be taken to ensure that no additional oxygen or oxidizing substance will be supplied to the soil once it has been mixed with the iron powder. In other words, in the *in-situ* treatment or post-excavation treatment, the surface of the soil is desirably protected from making direct contact with a further supply of ambient air.

Generally for the purpose of enabling *in-situ* treatment of contaminated soils with iron powders, particularly for establishing an effective way to degrade and remove chlorinated organic compounds in soils, the present inventors conducted various testing and research efforts and have found that the degradation of chlorinated organic compounds was markedly accelerated by imparting heat to the contaminated soils so that they had temperatures higher than their natural temperature. It also became clear that this heating of the contaminated soils can be accomplished in a fairly simple and yet harmless manner by utilizing the heat of neutralization, hydration and other chemical reactions of inorganic compounds. It was also found that a particularly advantageous iron powder was a spongy one that had a carbon content of at least 1 wt%, a specific surface area of at least 500 cm²/g, with at least 50 wt% of the particles passing through a 150-µm sieve, and which had a pearlite structure formed on the surface layers of the iron particles.

The simplest means of heating contaminated soils is by adding heat-generating inorganic compounds, either alone or in combination, to the soils. If the heat of neutralization is to be utilized, both an acidic compound and a basic compound may be added to generate a harmless salt; if the heat of hydration is to be utilized, an inorganic compound such as quick lime that produces the heat of hydration reaction may be added. Preferred examples of inorganic compounds that can be used either alone or in combination in such cases include mineral acids such as sulfuric acid, hydrochloric acid, nitric acid and phosphoric acid; preferred examples of basic inorganic compounds include quick lime, slaked lime, sodium hydroxide, sodium carbonate and calcium carbonate. Depending upon their type, these inorganic compounds may be added to soils in the form of either an aqueous solution or a solid and, if they are in a solid form, water may be added either before or after their addition; in this way, the temperature of the soil can be maintained higher than its natural temperature.

A heating medium or Joule's heat is another means for imparting heat to contaminated soils. In the case of a heating medium, it is economical to use heated air or water or a heated complex of air or water (as exemplified by warm wind, warm water, hot water, etc.). These may be directly supplied into the soil to increase its temperature; alternatively, heat-exchange pipes may be laid down and a suitable heating medium is supplied into the soil via the pipes. If Joule's heat is to be utilized, heating mats or electric heating wires that generate heat upon current impression are conveniently placed in the ground as is commonly the case with farming in greenhouses.

By performing the above-described soil treatment for 2-3 months, contaminated soils can be remediated to meet the Environmental Quality Standards in Japan concerning soil contamination (Notification from the Environmental Agency on August 23, 1991, Amended by Notification No. 19 in 1993, Notification Nos. 5 and 25 in 1994 and Notification No. 19 in 1995).

In Examples 1 - 4, samples were prepared in the following manner. A light-tight PVC container measuring 100 mm (i.d.) and 500 mm (height) was filled with a specimen prepared by mixing a trichloroethylene-contaminated soil with a specified proportion of iron powder. Distilled water was introduced into the container to a height of 150 mm from its bottom, thereby reproducing a saturated zone corresponding to a soil below the groundwater level whereas an unsaturated zone corresponding to a soil above the groundwater level was reproduced in the top 350 mm portion.

Specimens were prepared in containers that were as many as the samples to be taken; they were then left at ordinary temperatures for a specified time and sampling was done on each container. Using a tubular sampler, a rod of sample extending from the top to the bottom of each container was taken and, hence, each sample contained both the soil in a saturated zone and the soil in an unsaturated zone.

The iron powders to be tested were prepared from a spongy ore reduced iron powder (E-200) produced by Dowa Iron Powder Industry Co., Ltd.; E-200 was purified reductively, sintered, ground and sifted so that its physical properties were adjusted to specified values.

In order to have a thorough picture of how the prepared iron powders degraded chlorinated organic compounds, trichloroethylene analysis was not done by a method in compliance with the Environmental Quality Standards but by a method that consisted of the steps of measuring the water content of a soil and determining the trichloroethylene concentration relative to dry soil weight (in compliance with the method described in "Kankyo to Sokutei Gijutsu" published by the Japan Society of Environmental Measurement and Analysis, Corporation, Vol. 16, No. 15, pp. 31 - 34, 1989).

According to the Soil Environmental Quality Standards in Japan, contamination is expressed as the amount of elution (mg/L) into water 10 times as much as soil weight; therefore, one may safely conclude that the Soil Environmental Quality Standards are satisfied if the content of a contaminant (mg/kg) is no more than 10 times the reference value (mg/L).

### [Example 1]

At varying particle sizes of iron powder, the state of degradation of trichloroethylene in a soil was investigated.

The iron powder used had a carbon content of 0.2 wt% and a specific surface area of 2,000 cm²/g; if it was added to the soil, the amount of addition was 0.2 wt%; the state of degradation of trichloroethylene was investigated for the following three cases: i) no iron powder was added to the soil; ii) there was added an iron powder at least 50 wt% of whose particles passed through a 300-µm sieve; and iii) there was added an iron powder at least 50 wt% of whose particles passed a 150-µm sieve.

The results are shown in Table 1.

**Table 1. Time-dependent change in trichloroethylene as a function of the particle size of iron powder**

| | | | (in ppm) | |
|---|---|---|---|---|
| | Day 0 | 30 days | 60 days | 90 days |
| Iron powder not added | 8.0 | 7.5 | 7.3 | 6.9 |
| Iron powder (300 µm pass) added | 7.8 | 5.0 | 3.3 | 2.5 |
| Iron powder (150 µm pass) added | 8.2 | 2.2 | 0.45 | 0.11 |

These results show that the iron powder preferably has such a particle size that at least 50 wt% of the particles pass a 150 µm sieve.

### [Example 2]

At varying proportions of addition of iron powder to soil, the state of degradation of trichloroethylene was investigated.

The iron powder used had a carbon content of 0.2 wt% and a specific surface area of 2,000 cm²/g; its particle size was such that at least 50 wt% of the particles passed a 150 µm sieve; the state of degradation of trichloroethylene was investigated for the following four cases: i) no iron powder was added to the soil; ii) the iron powder was added in an amount of 0.03 wt%; iii) it was added in an amount of 0.1 wt%; and iv) it was added in an amount of 1.0 wt%.

The results are shown in Table 2.

**Table 2. Time-dependent change in trichloroethylene as a function of the proportion of addition of iron powder**

| | | | (in ppm) | |
|---|---|---|---|---|
| | Day 0 | 30 days | 60 days | 90 days |
| Iron powder not added | 7.5 | 7.2 | 7.2 | 6.8 |
| Iron powder added in | | | | |
| 0.03% | 8.1 | 7.2 | 6.3 | 5.5 |
| 0.1% | 7.0 | 2.5 | 0.90 | 0.29 |
| 1.0% | 7.3 | 0.82 | 0.06 | 0.01 |

These results show that at least 0.1 wt%, desirably at least 0.2 wt%, of the iron powder should be added to soil.

### [Example 3]

At varying carbon contents of iron powder, the state of degradation of trichloroethylene was investigated.

The iron powder used had a specific surface area of 2,000 cm²/g; it was added to a soil in an amount of 0.2 wt% and had such a particle size that at least 50 wt% of the particles passed a 150 µm sieve. The state of degradation of trichloroethylene was investigated for the following four different carbon contents of the iron powder: 0.005 wt%, 0.05 wt%, 0.1 wt%, and 0.2 wt%.

The results are shown in Table 3.

**Table 3. Time-dependent change in trichloroethylene as a function of the carbon content of iron powder**

| | | | (in ppm) | |
|---|---|---|---|---|
| | Day 0 | 30 days | 60 days | 90 days |
| Carbon content | | | | |
| 0.005% | 8.0 | 7.5 | 6.2 | 4.5 |
| 0.05% | 7.8 | 6.0 | 4.4 | 3.6 |
| 0.1% | 6.9 | 2.8 | 0.89 | 0.29 |
| 0.2% | 8.1 | 2.4 | 0.45 | 0.13 |

These results show that the carbon content of the iron powder should be at least 0.1 wt%, desirably at least 0.2 wt%.

### [Example 4]

The state of degradation of trichloroethylene was investigated for iron powders differing in specific surface area, or the surface area per unit weight.

The iron powders used had a carbon content of 0.2 wt% and their particle size was such that at least 50 wt% of the particles passed a 150 µm sieve; they were each added to a soil in an amount of 0.2 wt%. The state of degradation of trichloroethylene was investigated for the following three different values of specific surface area: 300 cm²/g, 500 cm²/g and 2,000 cm²/g.

The results are shown in Table 4.

**Table 4. Time-dependent change in trichloroethylene as a function of the specific surface area of iron powder**

| | | | (in ppm) | |
|---|---|---|---|---|
| | Day 0 | 30 days | 60 days | 90 days |
| Specific surface area | | | | |
| 300 cm²/g | 6.1 | 3.0 | 1.6 | 0.70 |
| 500 cm²/g | 5.9 | 2.1 | 0.78 | 0.29 |
| 2000 cm²/g | 6.1 | 1.8 | 0.50 | 0.18 |

These results show that in order to bring about significant results, the iron powder should have a specific surface area of at least 500 cm²/g, desirably at least 2,000 cm²/g.

As will be understood from the foregoing, the iron powder necessary to degrade chlorinated organic compounds should have a carbon content of at least 0.1 wt%, such a particle size distribution that at least 50 wt% of the particles pass a 150 µm sieve, and a specific surface area of at least 500 cm²/g, notably at least 2,000 cm²/g; when such an iron powder was added to soil in a relative amount of 0.1 wt% - 10 wt%, unconventional significant results were attained.

### [Example 5]

In order to investigate the state of degradation of trichloroethylene as a function of the water content (%) of soil, a test was conducted on simulated soil samples in an unsaturated zone that differed in the state of dryness.

Glass vials (100 ml) were filled with dry soil (40 g), trichloroethylene (1 µl), iron powder E-200 (1 g) and varying amounts of water; the respective ingredients were mixed together and left to stand; the changes in the TCE concentration in the headspaces of the individual vials were measured.

**Table 5.**

| Water content (%) | Time of reaction (days) | |
|---|---|---|
| | 3 days | 12 days |
| ① 1% | 96.3 | 92.1 |
| ② 5% | 34.2 | 0.5 |
| ③ 10% | 31.5 | 0.3 |

These results show that even in a soil system having no saturated zone, the degradation of trichloroethylene by the invention method progressed effectively with a soil water content of at least 5%.

### [Example 6]

In order to investigate the effect of a copper-containing iron powder on the cleaning of groundwater, a degradation test was conducted in the following manner using a copper-containing iron powder.

A 100 mL vial (product of Nichiden Rika Glass Co., Ltd. with a capacity of 120 mL) was charged with deionized water (100 mL); after adding a chlorinated organic compound (1 µl) and a copper-containing iron powder (0.6 g), the vial was sealed with a Teflon-lined rubber stopper and an aluminum cap, leaving a headspace of about 20 mL in the top of the vial. The thus sealed vial was shaken with a shaker in a constant-temperature chamber at a speed of 120 shakes per minute.

From the headspace of the vial, a 100-µL portion of gas was sampled at regular time intervals and analyzed with a gas chromatograph/mass spectrometer GS-MS (HP-5973 of HewlettPackard) to determine the time-dependent changes in the concentration of the chlorinated organic compound in each of the samples.

The copper-containing iron powder to be used in the test was prepared by the following method; to 50 g/L of an aqueous solution of copper sulfate, an iron powder (E-200) was added (at a copper to iron ratio of 1:3.5) and the resulting precipitate was recovered with a suction filter and vacuum dried. This procedure gave a copper-containing iron powder with a copper content of 20 wt%.

The following 16 chlorinated organic compounds were chosen and subjected to a degradation test with the copper-containing iron powder by the method described above: dichloromethane, chloroform, carbon tetrachloride, 1,1-dichloroethane, 1,2-dichloroethane, methylchloroform (trichloromethane), 1,1,2-trichloroethane, 1,1,1,2-tetrachloroethane, 1,1,2,2-tetrachloroethane, 1,1-dichloroethylene, cis-1,2-dichloroethylene, trans-1,2-dichloroethylene, trichloroethylene, tetrachloroethylene, 1,3-dichloropropene and 1,3-dichloropropane. The test results are shown in Table 6.

**Table 6.**

| Chlorinated organic compound | Days past | Example (residual Cu-containing Fe powder, %) | Com. Example (residual iron powder E-200, %) |
|---|---|---|---|
| dichloromethane | 4 | 51.9 | 100 |
| chloroform | 4 | <0.5 | 100 |
| carbon tetrachloride | 1 | <0.5 | <0.5 |
| 1,1-dichloroethane | 4 | <0.5 | 100 |
| 1,2-dichloroethane | 13 | 47.2 | 100 |
| methylchloroform | 1 | <0.5 | 100 |
| 1,1,2-trichloroethane | 4 | <0.5 | 100 |
| 1,1,1,2-tetrachloroethane | 1 | <0.5 | <0.5 |
| 1,1,2,2-tetrachloroethane | 1 | <0.5 | 13.4 |
| 1,1-dichloroethylene | 5 | <0.5 | 100 |
| cis-1,2-dichloroethylene | 5 | 8.8 | 100 |
| trans-1,2-dichloroethylene | 5 | <0.5 | 100 |
| trichloroethylene | 1 | 31.6 | 100 |
| tetrachloroethylene | 5 | <0.5 | 99.0 |
| 1,3-dichloropropene | 1 | 1.2 | 83.5 |
| 1,3-dichloropropane | 13 | 40.2 | 100 |

Of these 16 substances, dichloromethane, 1,2-dichloroethane, trichloroethylene and 1,3-dichloropropane had their content halved or reduced to less than half within 13 days after the start of the reaction. As for cis-1,2-dichloroethylene and 1,3-dichloropropene, the residual content dropped to less than 10% when 1 - 5 days passed after the start of the reaction. The contents of the other substances dropped below the detection limit 1 - 5 days after the start of the reaction.

It should also be mentioned that upon degradation, those 16 substances evolved harmless gases such as methane, ethane, ethylene, propane and propene but no other intermediate byproducts were detected.

### [Comparative Example 1]

The above-mentioned 16 substances were subjected to a degradation test by the same method as in Example 6, except that an iron powder (E-200) was substituted for the copper-containing iron powder. The test results are shown in Table 6.

Of the 16 substances tested, carbon tetrachloride, 1,1,1,2-tetrachloroethane and 1,1,2,2-tetrachloroethane decomposed by more than 85% in one day after the start of the reaction. For the other substances, no significant decrease in concentration occurred in 1 - 13 days after the start of the reaction.

### [Example 7]

In order to investigate the effect of a copper-containing iron powder on soil cleaning, a trichloroethylene solution prepared from deionized water was added to 40 g of sandy soil, thereby preparing 100 mg/kg of a trichloroethylene contaminated soil. This soil was mixed with 2.5 wt% of a copper-containing iron powder and the mixture was sealed in a vial (capacity, 120 mL) to prepare a sampling specimen. The trichloroethylene concentration was measured with GC-FID at given time intervals. Throughout the degradation period, the specimen was left to stand in a constant-temperature chamber at 25 °C. The results are shown in,Table 7.

**Table 7.**

| Days | Residual trichloroethylene (%) | |
|---|---|---|
| | Cu-containing Fe powder used | Fe powder (E-200) used |
| 3 | <0.5 | 34.2 |
| 12 | <0.5 | 0.5 |
| 19 | not tested | 0.5 |

As Table 7 shows, the concentration of trichloroethylene decreased to less than the detection limit within 3 days from the start of the reaction. Further, trichloroethylene decomposed into harmless ethylene and ethane and no other intermediate products were detected.

This tendency was observed not only in the decomposition of trichloroethylene but also with other chlorinated organic compounds such as tetrachloroethylene, methylchloroform and dichloromethane.

### [Comparative Example 2]

A decomposition test was conducted on trichloroethylene by the same method as in Example 7, except that an iron powder (E-200) was substituted for the copper-containing iron powder. The test results are shown in Table 7.

Trichloroethylene decomposed by more than 65% in 3 days after the start of the reaction and by more than 99% in 12 days. Obviously, the reaction time was longer than when the copper-containing iron powder was used.

### [Example 8]

According to the method of the invention, the reduction of halogenated organic compounds with the iron powder is markedly accelerated and the reaction rate enhanced by using the iron powder in combination with a reducing substance, notably sodium hydrogensulfite, that is water-soluble and which exhibits weak acidity in water.

The reducing substance that is water-soluble and which exhibits weak acidity in water may be injected into the ground together with the iron powder; alternatively, it may be preliminarily added to a contamination source by a different route than where the iron powder is to be injected. If the reducing substance that is water soluble and which exhibits weak acidity in water is added to a target in an amount less than 100 ppm, the effectiveness of using said reducing substance in combination with the iron powder is impracticably low. Hence, said reducing substance is desirably added in an amount of at least 100 ppm. A more desirable range of addition is between 500 and 10,000 ppm. If the addition is 500 ppm or more, further enhancement of the reaction rate is accomplished; if the addition exceeds 10,000 ppm, the cost of the chemical required to treat the target is increased to an economically infeasible level.

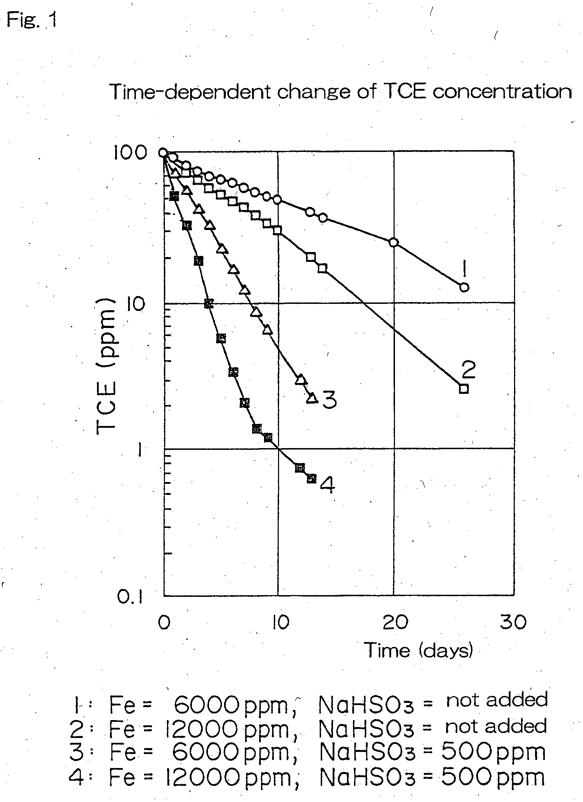

A container of water containing 100 ppm of trichloroethylene (TCE) as a halogenated organic compound was charged with 500 ppm of sodium hydrogensulfite (NaHSO₃), then with 6,000 - 12,000 ppm of an iron powder (E-200); the container was sealed and shaken. Gas samples were taken out of the headspace in the top of the container at given time intervals and measured for the time-dependent changes in the concentration of trichloroethylene. The results of the measurement are shown in Table 8 and Fig. 1, from which one can see that with the lapse of time, the trichloroethylene concentration decreased sharply, even to less than 10 ppm at day 8 in the case where the iron powder was added in an amount of 6,000 ppm.

**Table 8. Time-dependent changes in TCE concentration (in ppm)**

| (NaHSO₃ added in 500 ppm) | | |
|---|---|---|
| Days | Fe addition = 6,000 ppm | Fe addition = 12,000 ppm |
| 0 | 100.0 | 100.0 |
| 1 | 72.6 | 52.4 |
| 2 | 56.8 | 33.2 |
| 3 | 43.3 | 19.2 |
| 4 | 33.5 | 9.92 |
| 5 | 23.5 | 5.82 |
| 6 | 17.1 | 3.39 |
| 7 | 12.5 | 2.08 |
| 8 | 8.73 | 1.38 |
| 9 | 6.69 | 1.21 |
| 12 | 3.08 | 0.75 |
| 13 | 2.27 | 0.64 |

### [Comparative Example 3]

The time-dependent changes in the concentration of trichloroethylene were measured under the same conditions as in Example 8, except that sodium hydrogensulfite was not added. The results are shown in Table 9; they are also shown in Fig. 1 together with the results of Example 8. According to Table 9 and Fig. 1, the use of the iron powder alone caused the trichloroethylene concentration to decrease steadily with time although sodium hydrogensulfite was not added; however, in the case where 6,000 ppm of the iron powder was added, more than 26 days were required for the trichloroethylene concentration to decrease to less than 10 ppm.

**Table 9. Time-dependent changes in TCE concentration (in ppm)**

| (NaHSO₃ not added) | | |
|---|---|---|
| Days | Fe addition = 6,000 ppm | Fe addition = 12,000 ppm |
| 0 | 100.0 | 100.0 |
| 1 | 91.8 | 89.1 |
| 2 | 82.6 | 75.8 |
| 3 | 75.8 | 66.1 |
| 4 | 68.9 | 58.5 |
| 5 | 66.5 | 53.3 |
| 6 | 63.0 | 48.5 |
| 7 | 58.4 | 44.1 |
| 8 | 54.5 | 38.5 |
| 9 | 51.5 | 34.5 |
| 10 | 49.8 | 30.8 |
| 13 | 40.3 | 20.4 |
| 14 | 37.7 | 17.5 |
| 20 | 25.2 | |
| 26 | 12.6 | 2.64 |

### [Example 9]

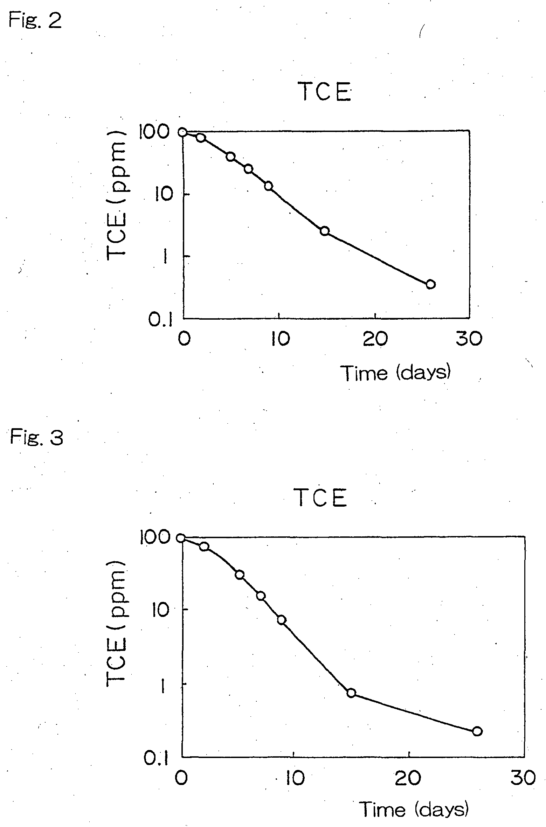

A container of water containing 100 ppm of trichloroethylene (TCE) as a halogenated organic compound was charged with 500 ppm of sodium disulfite (Na₂S₂O₅), then with 6,000 ppm of an iron powder (E-200); the container was sealed and shaken. Gas samples were taken out of the headspace in the top of the container at given time intervals and measured for the time-dependent change in the concentration of trichloroethylene. Throughout the measurement, pH was kept at 4.7 - 6.6. The results of the measurement are shown in Table 10 and Fig. 2, from which one can see that with the lapse of time, the trichloroethylene concentration decreased sharply, even to less than 10 ppm at day 10 in the case where the iron powder was added in an amount of 6,000 ppm.

**Table 10. Time-dependent change in TCE concentration (in ppm)**

| (Na₂S₂O₅ added in 500 ppm) | |
|---|---|
| Days | Fe addition = 6,000 ppm |
| 0 | 100.00 |
| 2 | 81.6 |
| 5 | 39.8 |
| 7 | 25.1 |
| 9 | 13.4 |
| 15 | 2.6 |
| 26 | 0.4 |

### [Example 10]

A container of water containing 100 ppm of trichloroethylene (TCE) as a halogenated organic compound was charged with 500 ppm of sodium dithionite (Na₂S₂O₄), then with 6,000 ppm of an iron powder (E-200); the container was sealed and shaken. Gas samples were taken out of the headspace in the top of the container at given time intervals and measured for the time-dependent change in the concentration of trichloroethylene. Throughout the measurement, pH was kept at 4.3 - 6.6. The results of the measurement are shown in Table 11 and Fig. 3, from which one can see that with the lapse of time, the trichloroethylene concentration decreased sharply, even to less than 10 ppm at day 10 in the case where the iron powder was added in an amount of 6,000 ppm.

**Table 11. Time-dependent change in TCE concentration (in ppm)**

| (Na₂S₂O₄ added in 500 ppm) | |
|---|---|
| Days | Fe addition = 6,000 ppm |
| 0 | 100.00 |
| 2 | 73.7 |
| 5 | 30.0 |
| 7 | 15.3 |
| 9 | 7.3 |
| 15 | 0.8 |
| 26 | 0.2 |

### [Example 11]

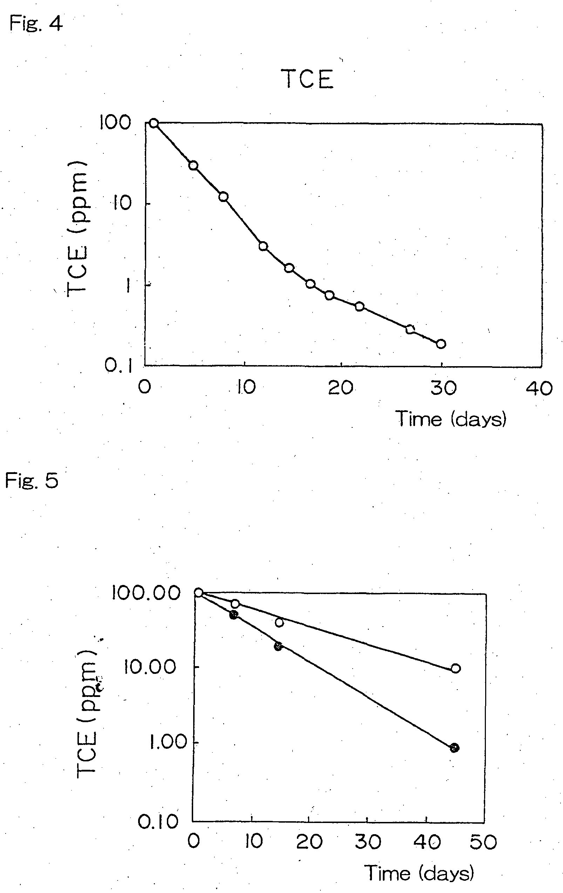

A container of water containing 100 ppm of trichloroethylene (TCE) as a halogenated organic compound was charged with 500 ppm of sodium hydrogensulfite (NaHSO₃), then with 6,000 ppm of an iron powder (E-200); the container was sealed and shaken. Gas samples were taken out of the headspace in the top of the container at given time intervals and measured for the time-dependent change in the concentration of trichloroethylene. Throughout the measurement, pH was kept at 4.7 - 6.6. The results of the measurement are shown in Table 12 and Fig. 4, from which one can see that with the lapse of time, the trichloroethylene concentration decreased sharply, even to less than 10 ppm at day 10 in the case where the iron powder was added in an amount of 6,000 ppm.

**Table 12. Time-dependent change in TCE concentration (in ppm)**

| (NaHSO₃ added in 500 ppm) | |
|---|---|
| Days | Fe addition = 6,000 ppm |
| 1 | 100.0 |
| 5 | 28.8 |
| 8 | 12.4 |
| 12 | 3.1 |
| 15 | 1.7 |
| 17 | 1.1 |
| 19 | 0.8 |
| 22 | 0.6 |
| 27 | 0.3 |
| 30 | 0.2 |

### [Reference Example 1]

A container of water containing 100 ppm of trichloroethylene (TCE) as a halogenated organic compound was charged with 6,000 ppm of an iron powder (E-200); the container was sealed together with air and shaken. Gas samples were taken out of the headspace in the top of the container at given time intervals and measured for the time-dependent change in the concentration of trichloroethylene. The same experiment was conducted, except that the air in the container was replaced by 100% CO₂. The results of the measurements are shown in Table 13 and Fig. 5, from which one can see that the trichloroethylene concentration decreased with the lapse of time, provided that a marked improvement in the reaction rate was achieved when the air was replaced by CO₂.

**Table 13. Time-dependent changes in TCE concentration (in ppm**

| (NaHSO₃ added in 500 ppm) | | |
|---|---|---|
| Days | Fe addition = 6,000 ppm in air | Fe addition = 6,000 ppm in CO₂ gas |
| 1 | 100.00 | 100.00 |
| 3 | 81.27 | 80.56 |
| 7 | 64.12 | 50.38 |
| 15 | 37.73 | 18.75 |
| 45 | 10.10 | 0.85 |

### [Reference Example 2]

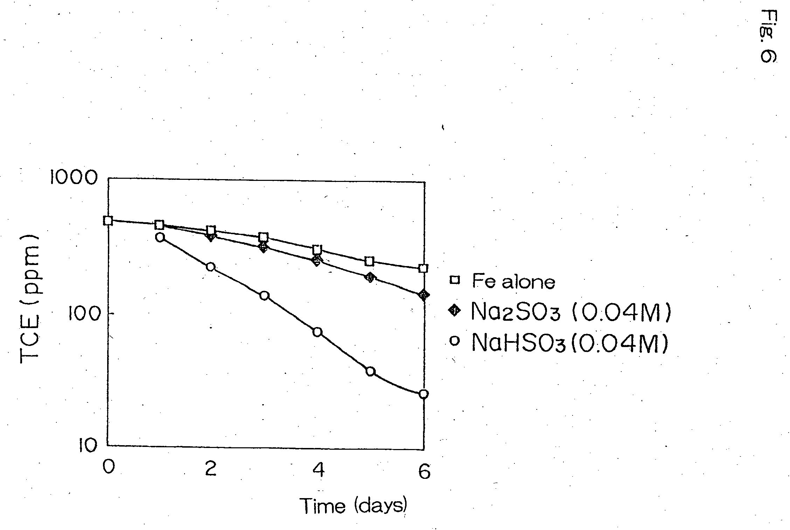

A container of water containing 100 ppm of trichloroethylene (TCE) as a halogenated organic compound was charged with (1) 10,000 ppm of an iron powder alone, (2) 10,000 ppm of an iron powder and 0.04 M of sodium sulfite (Na₂SO₃) or (3) 10,000 ppm of an iron powder and 0.04 M of sodium hydrogensulfite (NaHSO₃); the containers were sealed together with air and shaken. Gas samples were taken out of the headspace in the top of each container at given time intervals and measured for the time-dependent change in the concentration of trichloroethylene. The results of the measurements are shown in Table 14 and Fig. 6, from which one can see that the trichloroethylene concentration decreased with the lapse of time, but in the case of adding the iron powder alone, the reaction rate was unduly slow; in the presence of both the iron powder and sodium sulfite, the reaction rate increased slightly. In sharp contrast with these cases, the reaction rate was markedly improved by allowing both the iron powder and sodium hydrogensulfite to be present in the system.

**Table 14. Time-dependent changes in TEC concentration (in ppm)**

| Days | Fe addition = 10,000 ppm | Fe addition = 10,000 ppm plus Na₂SO₃ (0.04 M) pH = 9.3 - 9.2 | Fe addition = 10,000 ppm plus NaHSO₃ (0.04 M) pH = 4.7 - 6.6 |
|---|---|---|---|
| 0 | 500 | 500 | 500 |
| 1 | 464 | 471 | 375 |
| 2 | 424 | 398 | 232 |
| 3 | 381 | 335 | 140 |
| 4 | 302 | 268 | 75.4 |
| 5 | 260 | 196 | 38.4 |
| 6 | 234 | 145 | 26.2 |

On the pages that follow, the third embodiment will be described with reference to working examples to demonstrate that upon preliminary heating, chlorinated organic compounds in soil can be effectively degraded by an iron powder to become harmless.

### [Example 12]

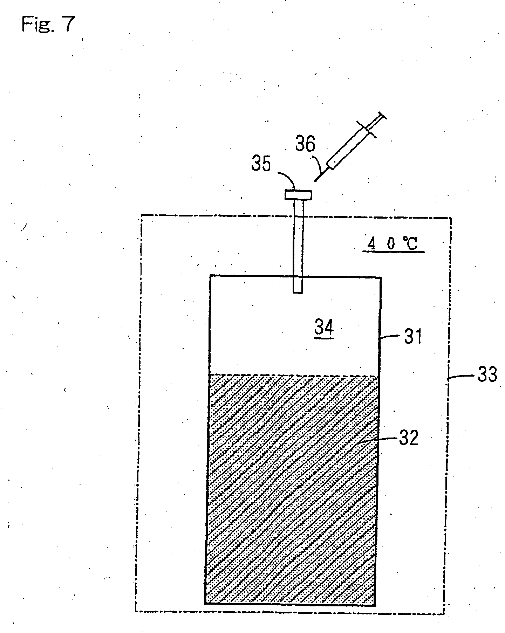

As shown in Fig. 7, a capped container 1 (capacity: 2 L) was charged with a soil under test 2 (ca. 3 kg) and set in a constant-temperature bath 3 where it was maintained at a constant temperature. The headspace 4 of the container 1 had a volume of about 100 cm³. The container 1 was fitted with a septum 5 for gas sampling. By inserting a micro-syringe 6 through the septum 5, the gas in the headspace 4 can be drawn into the syringe 6 and analyzed with GC-MS of Hewlett-Packard to measure the concentration of a chlorinated organic compound in the sampled gas.

The test soil was a soil having a water content of 10%, into which trichloroethylene (TCE) and an iron powder were dispersed in respective amounts of 5 mg/kg and 1 wt%. The iron powder had the trade name E-200 and was available from Dowa Iron Powder Industry Co., Ltd. It had a carbon content of 0.3%, a particle size such that 60 wt% of the particles would pass a 150 µm sieve and a specific surface area of 2000 cm²/g or more, with a pearlitic structure present on the surface layers of the individual particles.

The container 1 partly filled with the test soil 2 was left to stand in the constant-temperature bath 3 for 30 days at a maintained temperature of 40 °C and the gas in the headspace 4 was analyzed. The result is shown in Table 15.

For comparison, the same test soil was subjected to the same experiment (held at a constant temperature of 40 °C), except that no iron powder was added. The result of this experiment is also shown in Table 15 under Comparative Example A. A similar experiment was conducted on the same test soil (loaded with an iron powder), except that the vessel containing said soil was not placed in the constant-temperature bath but held at room temperature between 17 and 25 °C. The result of this experiment is also shown in Table 15 under Comparative Example B.

**Table 15.**

| | TCE concentration in headspace (mg/L) | | |
|---|---|---|---|
| | day 0 | 5 days | 30 days |
| Example 12 | N.D | <0.001 | <0.001 |
| Comp. Ex. A (without Fe powder) | 4.6 | 4.4 | 4.3 |
| Comp. Ex. B (held at RT) | 0.3 | 0.09 | 0.02 |

| | | | |
|---|---|---|---|
| Note: "ND" indicates that TCE could not be detected with the analyzer. | | | |

As one can see from Table 15, upon heating the soil to which the iron powder had been added, the vapor-phase TCE was completely degraded and no chlorinated organic compound was released to the outside of the soil. "< 0.001" in Table 15 means that TCE was detected but not in a quantitative amount. In Comparative Example B where an iron powder was added but not heated, TCE degraded at a slower rate than when heating was done and, hence, it took a longer time to be fully degraded.

### [Example 13]

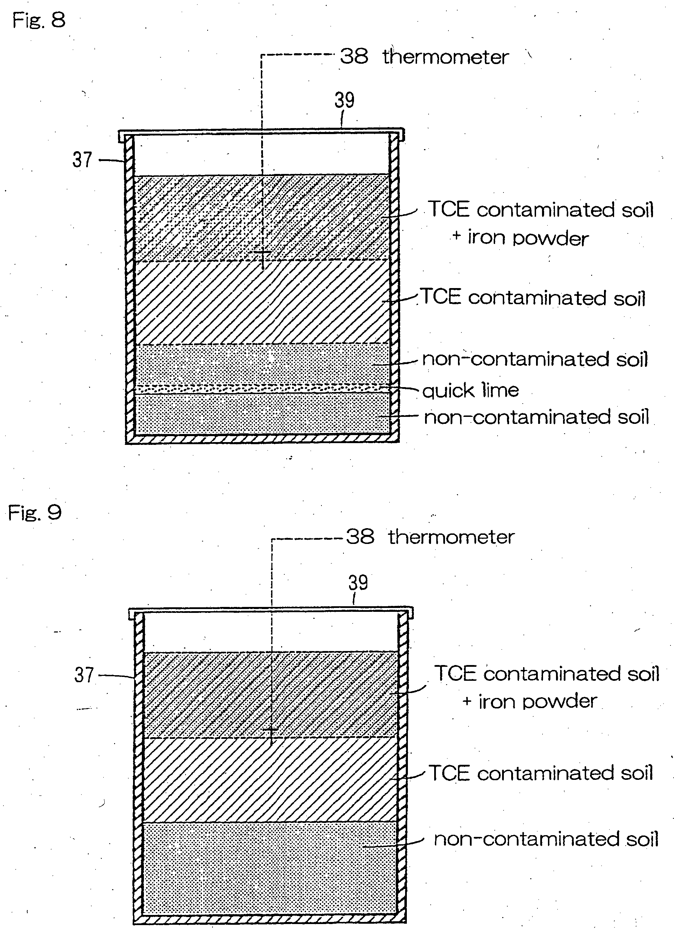

As shown in Fig. 8, a cylindrical heat-insulated container 7 (30 cm in i.d. and 36 cm in height) was filled, from the bottom upward, with a non-contaminated soil layer 5 cm thick, a quick lime layer 1 cm thick, a non-contaminated soil layer 5 cm thick, a TCE contaminated soil layer 10 cm thick, and a layer 10 cm thick that consisted of a TCE contaminated soil layer and an iron powder.

The quick lime layer consisted of flakes of quick lime which were used in an approximate amount of 2 kg. The TCE contaminated soil layer consisted of a non-contaminated soil layer in which trichloroethylene (TCE) was dispersed uniformly at a concentration of 7.5 mg/kg. The top layer consisted of said TCE contaminated soil layer in which an iron powder was dispersed uniformly at a concentration of 1 wt%. The iron powder was the same as what was used in Example 13.

The individual layers thus piled up within the container 7 were sprinkled with 1 L of water from above and the container was thereafter closed with a cap. A thermometer 8 was set in such a way that it could measure the temperature of the soil at a depth of 10 cm below the surface layer. Four identical sets of this equipment were constructed and left to stand in a place that was shielded from direct sunshine and where the ambient temperature was between 15 and 27 °C. On different days, the cap 9 was removed and samples were taken from the portion 19 - 20 cm below the surface layer (which consisted of the TCE contaminated soil having no iron powder added thereto) and their TCE concentrations were measured. TCE concentration was measured by a method that comprised the steps of measuring the water content of a soil to determine its dry weight and then determining the trichloroethylene concentration relative to the dry soil weight (in compliance with the method described in "Kankyo to Sokutei Gijutsu" published by the Japan Society of Environmental Measurement and Analysis, Corporation, Vol. 16, No. 15, pp. 31 - 34, 1989). This method provides a more reliable picture of how TCE was degraded and removed from the soil. The results of TCE concentration measurements are shown in Table 16 together with temperature readings.

For comparison, the same test was conducted as in Example 13 except that quick lime was not put into the soil, nor was it sprinkled with water. The soil composition for this case is shown in Fig. 9. The results of temperature and TCE level measurements are shown in Table 17 under Comparative Example C.

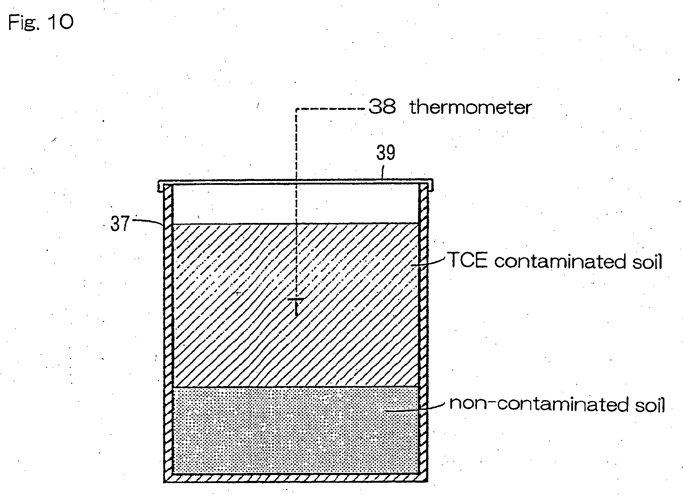

Another test was conducted in the same manner as in Example 13 except that neither iron powder nor quick lime was used and that the soil was not sprinkled with water. The soil composition for this case is shown in Fig. 10. The results of temperature and TCE level measurements are shown in Table 18 under Comparative Example D.

**Table 16.**

| Example 13 | day 0 | 1 day | 5 days | 10 days | 30 days |
|---|---|---|---|---|---|
| Soil temperature °C | 14 | 33 | 26 | 22 | 15 |
| TCE concentration, mg/kg | 7.5 | - | 1.4 | 0.22 | 0.023 |

**Table 17.**

| Comp. Ex. C | day 0 | 1 day | 5 days | 10 days | 30 days |
|---|---|---|---|---|---|
| Soil temperature °C | 13 | 13 | 14 | 14 | 14 |
| TCE concentration, mg/kg | 7.4 | - | 2.1 | - | 0.80 |

**Table 18.**

| Comp. Ex. D | day 0 | 1 day | 5 days | 10 days | 30 days |
|---|---|---|---|---|---|
| Soil temperature °C | 14 | 13 | 14 | 13 | 14 |
| TCE concentration, mg/kg | 7.4 | - | 7.2 | 7.2 | 7.1 |

By comparing Tables 16 and 17, one can see that heating the soil accelerates the speed of TCE degradation and at day 30, the TCE level dropped to 0.023 mg/kg which was extremely low compared to the value of 0.80 mg/kg that was attained in the absence of heating. Note that the position of the soil where this drastic drop in TCE concentration occurred (i.e., sampling position) was within the TCE contaminated soil layer (no iron powder was added) and remotest from the iron powder loaded layer. Obviously, irrespective of the position where the iron powder was present, heating of soil was effective in allowing TCE to be degraded and removed from the whole area of the TCE contaminated soil.

Comparing Tables 17 and 18, one can readily see that the presence of the iron powder contributes to the degradation of TCE; even at the aforementioned sampling position (in the TCE contaminated soil layer having no iron powder added thereto), the TCE concentration was lowered by incorporating the iron powder; however, without heating the soil, the TCE concentration did not decrease to the extremely low level shown in Table 16.

In conclusion, the presence of the iron powder contributes to TCE degradation and upon heating the soil, the TCE degradation is further enhanced and even TCE that is remote from the iron powder can be degraded effectively.

As described on the foregoing pages, the third embodiment is advantageously applicable to the case where a soil contaminated by chlorinated organic compounds is remediated with the aid of an iron powder and heating the soil accelerates the degradation of the contaminants so that the cleaning process is completed within a shorter time than when no heating is done. In addition, the invention method prevents the release of chlorinated organic compounds into air atmosphere, thereby preventing the generation of noxious secondary products. Coupled with the simplicity and economy of the process, these features of the invention method adds to its commercial value as a technology for cleaning contaminated soils.

### [Example 14]

The method of the invention is desirably implemented after evaluating various factors that include: i) the history of the use of the land; ii) the state of soil contamination that is characterized by the kind of the contaminant in the contaminated soil, its quantity, the form of its occurrence, and the scope of contamination, namely the extent and depth of the contaminated area; iii) the physical properties of the contaminant such as its solubility in water, vapor pressure, specific gravity, viscosity, surface tension and adsorbability on soil; iv) other factors such as the nature of the soil (i.e., the size of soil particles, hydraulic conductivity and cone index), soil temperature, water content, soil porosity, groundwater level, its quantity, flow rate and direction.

The reagent to be used for degrading chlorinated organic compounds is desirably a base metal powder having reducing action, notably an iron powder, and a spongy iron powder is more desirable.

*In-situ* working is primarily done by taking the state of soil contamination into consideration in such a way that a sheet-like phase in which the reagent such as an iron powder is mixed with the surface soil under agitation is applied over or above the contaminated area. To state more specifically, taking into account the scope of contamination, namely, the extent and depth of the contaminated area, a plurality of sheet-like mixed and agitated phases are placed side by side or piled up with one layer on top of another at suitable spacings, preferably 0.05 - 5 m. The spacings need not be constant and the direction of piling up the sheet-like phases is not necessarily vertical in the strict sense of the term. If the contaminated area is limited in scope, a columnar mixed and agitated phase may be applied in place of or in addition to the pile of sheet-like mixed and agitated phases; to make a columnar mixed and agitated phase, a vertical hole is bored in the ground and an agitated mixture of the reagent such as an iron powder and the soil is pushed as a column into the hole. The above-noted range for the spacing between two sheet-like mixed and agitated phases is also applicable to the spacing between a sheet-like mixed and agitated phase and a columnar mixed and agitated phase. The lower limit of 0.05 m is set to ensure operational convenience; if the upper limit of 5 m is exceeded, the degradation of contaminants is considerably retarded.

If the inside diameter of the columnar mixed and agitated phase is increased, the time and the labor that are required to apply the phase are increased. Desirably, a compact earth boring machine having a core inside diameter of no more than 10 cm is used to apply a plurality of columnar mixed and agitated phases at equal spacings in a square, triangular or other grid pattern. The exact spacing between adjacent columnar phases varies with the amount of the iron powder, the nature of the soil, the kind of contaminant and its quantity; the spacing is typically within 10 m, preferably within 5 m.

When forming the sheet-like and/or columnar mixed and agitated phases, the reagent such as an iron powder need not be uniformly mixed under agitation in the whole area of the soil that is contaminated with chlorinated organic compounds. If the reagent such as an iron powder that degrades chlorinated organic compounds in the ground is localized, the contaminant in the soil or groundwater that is near the reagent is adsorbed on the surface of the latter and, at the same time, the contaminant distant from the reagent moves through the soil by concentration diffusion to come closer to the reagent in an attempt to achieve a uniform distribution; eventually, the contaminant collects by itself on the surface of the reactant and undergoes degradation without being desorbed from said surface. Therefore, uniform mixing of the reagent such as an iron powder and the contaminated soil in order to ensure their contact is preferred but by no means necessary. In other words, even if the reagent does not make direct contact with the contamination source, the former helps positive progress of soil cleaning without potential dissipation of chlorinated organic compounds into the vapor phase. Note that the method of the invention is applicable to soils that have a water content of at least 5%.

Therefore, the reagent such as an iron powder can be mixed in the soil under agitation by the following simple and convenient means: if necessary, the soil at specified sites is freed of objectionable foreign matter such as wood chips and concrete fragments; the soil is sprayed with the reagent such as an iron powder and agitated to mix with the latter by means of an earth moving machine such as a back hoe; alternatively, the surface layer of the soil may be mixed under agitation with the reagent by means of a tractor or a cultivator; if desired, a vertical hole is made in the ground by means of an earth boring machine and later backfilled with a column of the reagent, either alone or in admixture with the removed soil. Depending on the need, compressed air or water may be used to force the reagent such as an iron powder into the ground at selected sites.

In certain cases, the contaminated area is near the contamination source or otherwise located to have high contamination level and it is in a comparatively deep position; in other cases, a contaminant heavier than water is localized in lumps in impermeable layers in the ground (this phenomenon is described as "DNAPL", or dense non-aqueous phase liquids). In both of these cases, a sheet-like phase in which the reagent such as an iron powder is mixed with the soil under agitation is desirably formed in more than one layer over the contaminated area; alternatively, a columnar phase in which the reagent is mixed with the soil under agitation may be created in or near the contamination source.

Non*-in-situ* cleaning of excavated soil can be accomplished by making heaps or the like in which the iron powder has mixed with the soil by diffusion. As in the case of *in-situ* cleaning, it is not absolutely necessary that the iron powder should diffuse through the soil uniformly and laminar diffusion will suffice for the intended cleaning. However, in the non*-in-situ* cleaning of excavated soil, the iron powder diffused through the soil is more likely to contact air atmosphere and undergo oxidation to become lower in cleaning ability. To avoid this possibility, the heaps of soil in which the iron powder has been mixed under agitation are desirably covered with sheets or used in combination with a weak acidic reducing substance to be described below. Covering the heaps with sheets is desirable since they also help prevent the contaminated soil from scattering about during the cleaning period.

The use of the reagent such as an iron powder should take the following factors into consideration: the kind of the chlorinated organic compound to be rendered harmless, its concentration, depth of contamination, its extent, the form of its occurrence, the nature of the contaminated soil, its temperature, water content, porosity, the level of the groundwater, its quantity, flow rate, direction and hydraulic conductivity. The reagent is desirably mixed with the soil under agitation so that its concentration is approximately 0.1 - 10 wt% of the soil and that the agitated layer is at least 1 cm. If the concentration of the reagent is less than 0.1 wt%, the reaction for degradation of chlorinated organic compounds is unduly slow; if the reagent's concentration is higher than 10 wt%, the cleaning cost is undesirably high.

The iron powder to be used as the reagent in the first manner of the invention is made of spongy iron which has a carbon content of at least 0.1%, with such a particle size that at least 50 wt% of the particles pass a 150 µm sieve, and a specific surface area of at least 500 cm²/g; desirably, the iron powder has a pearlitic structure. If the carbon content of the iron powder is less than 0.1%, the rate of degradation of the contaminant is unduly small; if less than 50 wt% of the particles can pass a 150 µm sieve, not only the rate of degradation of the contaminant but also the efficiency of utilization of the iron powder decreases and it has to be used in an excessive amount. With a view to enhancing the reactivity, the iron powder is a spongy one having large specific surface area. As already mentioned, the iron powder desirably has a pearlitic structure, or a lamellar structure of carbon and iron. Probably, the small current flowing in circuit between lamellas promotes the degradation of the contaminant (chlorinated organic compound).

In view of the activity of the iron powder, it is desired that the soil to be treated have an elution pH in the range of 3.5 - 9 and be held in a reducing atmosphere. If the soil has an unduly high elution pH, a hydroxide forms on the surfaces of the iron particles and their activity is lost to lower the cleaning efficiency. In addition, extreme ends of the elution pH are not preferred from the viewpoint of a second use of the cleaned land.

In order to ensure that the reaction for the degradation of contaminants proceeds efficiently, the iron powder is desirably used in a reducing atmosphere. One desirable way to meet this need is by using a weak acidic reducing substance in combination with the iron powder when the latter is used to form a sheet-like or columnar mixed and agitated phase with the
soil. Specifically, a reducing substance such as sodium hydrogensulfite, sodium disulfite or sodium dithionite is used in such an amount that the soil has an elution pH of about 3.9 - 9, preferably about 3.5 - 8.

If the weak acidic reducing substance is to be used in a contaminated soil having an elution pH in either an acidic or alkaline range, rather than in the neutral range of about 3.5 - 9, it is desired that an inorganic compound be added and mixed when forming a sheet-like or columnar mixed and agitated phase so as to make adjustment to the preferred pH range for assuring the activity of the iron powder. Inorganic compounds may be acidic or basic and, considering cost, safety and ease of
handling, preferred acidic inorganic compounds include sulfuric acid, phosphoric acid and sodium hydrogensulfate, and preferred basic inorganic compounds include quick lime, slaked lime, sodium hydroxide, sodium carbonate and calcium carbonate. Among these basic inorganic compounds, those which are solid at ordinary temperatures are preferably used in particles, flakes, small lumps or granules.

Depending on such factors as the kind and concentration of the chlorinated organic compound to be degraded and the scheduling of the remediating work, a heating source may be used in a reducing atmosphere as another means for enhancing the activity of the iron powder.

By applying the above-described method of the invention, chlorinated organic compounds in soils can be efficiently dechlorinated or dechlorohydrogenated.

### [Example 15]

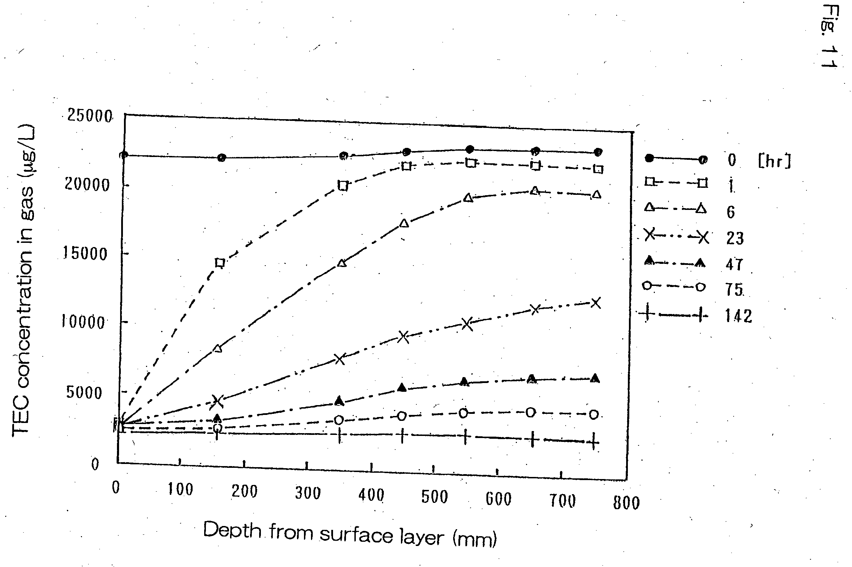

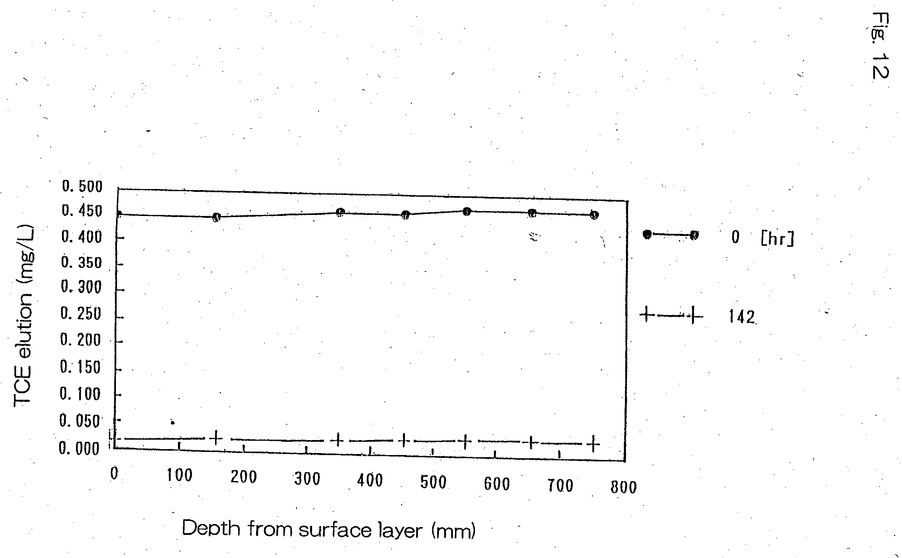

A 200 L cylindrical container (86 cm high x 58 cm in diameter) was charged with a sandy soil of a water content of 10% and 1 g of trichloroethylene (TCE) and left to stand for 2 days to make a sample column of uniform TCE contaminated soil. The surface of the contaminated soil was overlaid with a layer of an iron powder in an amount of 1 wt% of the contaminated soil. Right after the formation of the layer of iron powder (0 hours) and at 1, 6, 23, 47, 75 and 142 hours, a gas sample was drawn from the surface layer of the soil (0 mm) and at varying depths of 150, 350, 450, 550, 650 and 750 mm; the TCE concentration of each gas sample was measured and the time-dependent changes in TCE concentration as measured in the vertical direction of the column were plotted. The results are shown in Table 19 and Fig. 11. Both before and after the degradation experiment, a test was conducted for TCE elution from the soil and the results are shown in Table 20 and Fig. 12. The specimens for the elution test were sampled from the upper part of the column using a tubular device. The iron powder used was E-200.

**Table 19.**

| Depth from the surface layer (mm) | TCE concentration (*µ*g/L) | | | | | | |
|---|---|---|---|---|---|---|---|
| | 0 hr | 1 hr | 6 hr | 23 hr | 47 hr | 75 hr | 142 hr |
| 0 | 22238.1 | 2877.4 | 2671.0 | 2598.6 | 2471.2 | 2572.9 | 2484.3 |
| 150 | 22335.6 | 14613.2 | 8153.9 | 4106.6 | 3347.2 | 2964.7 | 2565.4 |
| 350 | 22836.3 | 20540.1 | 14773.4 | 8032.5 | 4913.6 | 3651.7 | 2695.7 |
| 450 | 23161.3 | 21993.3 | 17809.7 | 9666.5 | 5908.0 | 4095.9 | 2751.6 |
| 550 | 23500.6 | 22546.0 | 19313.8 | 11503.3 | 6420.9 | 4301.0 | 2728.8 |
| 650 | 23573.0 | 22524.1 | 20574.0 | 11528.5 | 6825.5 | 4550.2 | 2800.1 |
| 750 | 23651.2 | 22393.6 | 20384.3 | 12519.6 | 7074.7 | 4672.2 | 2805.7 |

**Table 20.**

| Depth from the surface layer (mm) | TCE eluted (mg/l) | |
|---|---|---|
| | 0 hr | 142 hr |
| 0 | 0.445 | 0.017 |
| 150 | 0.447 | 0.021 |
| 350 | 0.457 | 0.025 |
| 450 | 0.463 | 0.028 |
| 550 | 0.470 | 0.029 |
| 650 | 0.471 | 0.029 |
| 750 | 0.473 | 0.030 |

The data in Table 19 shows that a contaminated soil in the unsaturated zone need not be uniformly mixed with the reagent such as an iron powder but that the chlorinated organic compound as a contaminant adsorbed by itself on the surface of the reagent through diffusion, allowing for efficient progress of soil cleaning.

As a result, in about 6 days (142 hours) after the formation of the layer of iron powder, the concentration of TCE gas decreased to about one tenth of the initial level. As for the TCE elution (mg/L), none of the samples taken from various depths of the soil exceeded the reference value 0.03 mg/L specified in the Japanese Soil Environmental Quality Standards (see Table 20).

### [Example 16]

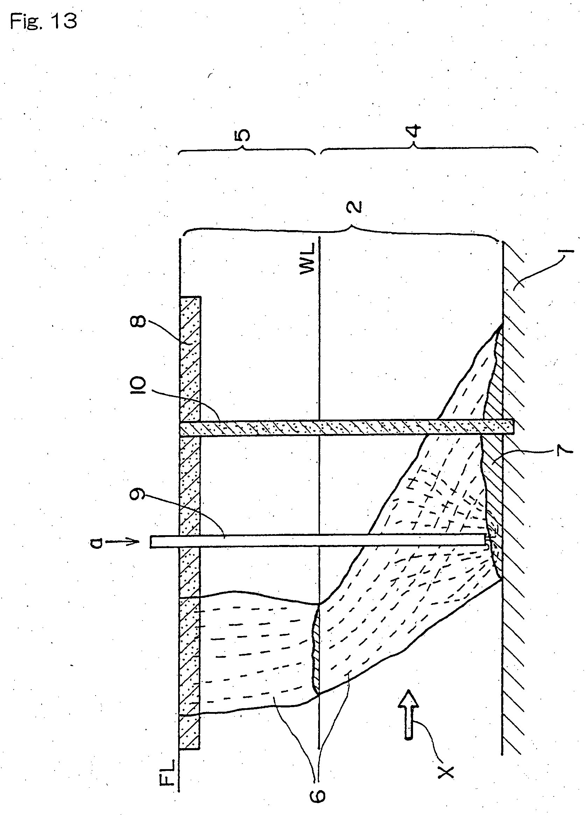

As Fig. 13 shows, the underground structure to be treated by the method of the invention generally consists of a high permeability layer 2 comprising sand and gravel layers and a low permeability layer 1 comprising clay and bedrocks. It can also be classified into an unsaturated zone 5 above the groundwater level WL and a saturated zone 4 below WL.

A contaminant infiltrating the ground from the surface level FL passes through the unsaturated zone 5 and the saturated zone 4 to contaminate the soil as well as underground air and groundwater, thus producing a contaminated area 6 that spreads along the flow of the groundwater represented by the arrow X. The contaminant which is heavier than water and slightly water-soluble forms a pool of lumps (DNAPL) 7 on the low permeability layer 1 to become the source of contamination of the groundwater.

In Fig. 13, the low permeability layer 1 which is the closest to the ground surface is shown to be located below the groundwater level WL but this is not always the case in nature and the low permeability layer may be located above WL.

The underground diffusion of the chlorinated organic compound is such that it first infiltrates into the ground from the surface and is then blocked by the low permeability layer to form a pool (DNAPL). The low permeability layer has fissures through which the chlorinated organic compound would diffuse to an even deeper area.

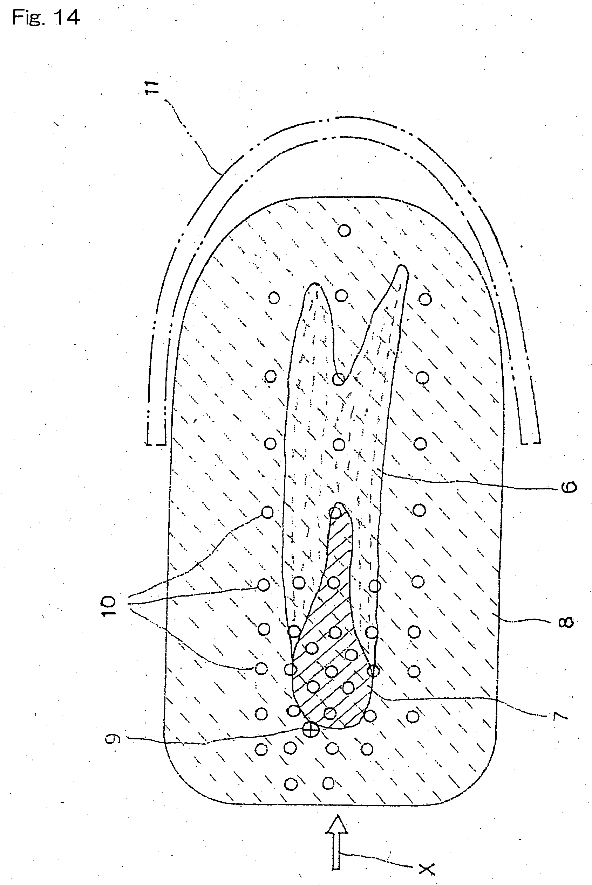

The method of the invention can be implemented efficiently on the basis of a preliminary survey of the above-described status of underground contamination by chlorinated organic compounds in relation to geological factors such as layers, the nature of the soil and the groundwater flow. More specifically, after verifying the kind of the contaminant, the position of the contaminated area in the ground, its spread and other factors, as shown in Figs. 13 and 14 a sheet-like iron powder mixed and agitated phase 8 is placed near the contaminated area 6, say, in its top layer and a gas injecting well 9 is formed by boring a hole through the high permeability layer to reach the contaminated area 6 or a nearby area; then, a gas a is injected into the well 9 to force the contaminant into the area where the sheet-like iron powder mixed and agitated phase 8 is placed; this allows for efficient implementation of the *in-situ* cleaning of the contaminated soil.

The iron powder can be dispersed into the ground by various methods. If the contamination has spread over a wide area, a tractor, a cultivator or the like is desirably employed to apply the iron powder diffused and mixed phase to a wide area of the surface soil layer. If the contamination has progressed locally as in the case where the underground contaminated area is created by the heavier-than-water and slightly water-soluble contaminant that is localized as lumps (DNAPL) 7 on the low permeability layer 1, an earthmoving machine such as a back hoe is desirably employed to form a localized sheet-like iron powder mixed and agitated phase 8 in more than one layer or create in the ground a columnar iron powder mixed and agitated phase 10 having the iron powder mixed with the soil in column shape under agitation. If necessary, a compressed medium of air or liquid may be blown into bored holes so that the iron powder is forcibly dispersed into the ground. If both a localized contamination of high concentration and an extensive contamination of low concentration occur complexly, one or more of the methods described above are desirably combined as appropriate for the specific status of each contamination.

The iron powder phase as a reagent for the degradation of chlorinated organic compounds need not have direct contact with the contaminated soil. In the mobile state, the chlorinated organic compound as the contaminant spontaneously moves through the soil by the mechanism of diffusion until it contacts the surface of a nearby reagent to be eventually degraded. Therefore, the iron powder mixed and agitated phase has no particular need to ensure uniformity in the distribution of the iron particles and even if it is disposed intermittently, rather than continuously, in the neighborhood of the contaminated area, the chlorinated organic compound in the soil is mobile enough to achieve satisfactory cleaning of the soil; thus, in the method of the invention, the iron powder mixed and agitated phase can be applied *in situ* with very high efficiency.

Considering the kind and concentration of the chlorinated organic compound to be degraded, the depth and extent of contamination, the nature of the soil, its water content, porosity, groundwater level, hydraulic conductivity and other factors, the iron powder is desirably dispersed in the ground in an amount of about 0.1 - 10 wt% of the soil. When applied, the thickness of the sheet-like iron powder mixed phase 8 is typically at least 1 cm, preferably at least 10 cm, whereas the diameter of the columnar iron powder mixed layer 10 is typically at least 1 cm, preferably at least 5 cm; whichever type of the iron powder mixed phase is used, it is desirably applied to avoid contact with air atmosphere. If less than 0.1 wt% of the iron powder is mixed with the soil, the rate of degradation of the contaminant drops considerably; even if more than 10wt% of the iron powder is used, there is no marked improvement and only an economic disadvantage results. If the thickness of the sheet-like iron powder mixed phase 8 or the diameter of the columnar iron powder mixed phase 10 is less than 1 cm, they are no longer suitable for remediating a highly concentrated contamination source.

Constructing columns of an iron powder mixed and agitated phase in the ground is particularly effective in highly concentrated or deep areas of contamination. If this method is to be applied, the columnar phase desirably satisfies the following two conditions: it should be deep enough to reach a low permeability layer located below the high permeability layer in the deepest part of the contamination; the hydraulic conductivity of the iron powder mixed and agitated phase should be equal to or higher than that of the neighboring soil so that it is highly permeable to the groundwater.

Depending on various factors such as the kind and concentration of the chlorinated organic compound to be degraded and the scheduling of the cleaning work, it is desired that at the site where the iron powder is to diffuse, a weak acidic reducing substance (e.g. sodium hydrogensulfite, sodium disulfite or sodium pyrosulfate) or a heating source is used with the iron powder so as to promote its degrading ability.

Ordinary atmospheric air may be supplied into the ground through the air injecting well 9 but considering the degrading characteristics of the iron powder, a gas having a lower oxygen content than air is preferred. This is because the iron powder used in the invention as the substance for cleaning soils and groundwater is oxidized with oxygen and its degrading performance is likely to be compromised. To avoid this difficulty, the ground is desirably supplied with nitrogen gas that can prevent the oxidation of the surfaces of the iron particles and which is cost effective. The higher the purity of the nitrogen gas, the better; however, in view of the underground environment and cost, nitrogen gas with a purity of 98% or higher is suitable. These gases to be used in the invention need not be at ordinary temperatures; they are desirably such that if assisted with heated air, vapor or a combination thereof, they can further enhance the mobility of the contaminant in the ground.

The air injecting well 9 can be bored as a hole that is vertical, at an angle or serpentine; if the position of a contamination is located in the ground, the well penetrating the contaminated area is formed in such a way that its bottom end is near the bottom of the contaminated area and the gas described in the preceding paragraph is squirted in tiny bubbles from said bottom end. For example, if bubbles are squirted into the saturated zone, the stagnant contaminant (mostly a slightly water-soluble substance) that exists as DNAPL in the saturated zone is either volatilized or moved into the bubbles so as to encourage its transfer from the saturated zone to the unsaturated zone. As a result, even the DNAPL-like contaminant staying at the bottom of the saturated zone is sufficiently fluidized so that it is transferred to the overlying unsaturated zone and undergoes progressive degradation by the columnar or sheet-like iron powder mixed and agitated phases that are formed around the well. The amount of the gas to be supplied and the interval of its supply vary with the kind and quantity of the contaminant located above the bottom end of the gas injecting well, the nature of the soil and other factors; if the concentration of the contaminant is high, the period of cleaning the soil is desirably shortened by underground aeration of the contaminant through continuous and periodical supply of a gas. If the extent of contamination is wide, a plurality of gas injecting wells may be bored in the ground and the above-described gas is simultaneously supplied through the wells to achieve better efficiency.

Depending on the kind of the contaminant, the nature of the soil, the level of groundwater, its quantity, the direction of its flow and other factors, the injection of a gas into the well may cause dissipation of the contaminant. If this problem is anticipated, the layout of the iron powder mixed and agitated phases may be properly designed to prevent the dissipation of the contaminant. If there is a concern for further spread of contamination to the periphery of the contaminated area, a known underground iron powder reactive barrier 11 (see Fig. 14) is desirably installed around the contaminated area to prevent the dissipation of the contaminated groundwater.

### [Example 17]

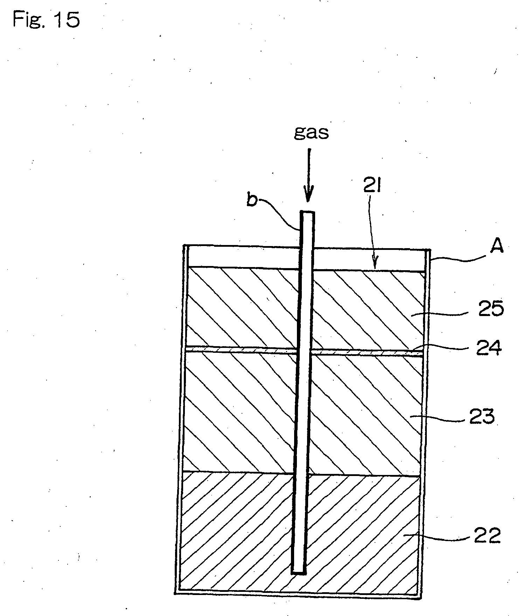

As Fig. 15 shows, a soil column 21 was prepared in a cylindrical container A (58 cm i.d. x 86 cm in height) by the following method. First, a saturated zone soil 22 (water content, 40%; sandy soil) contaminated with trichloroethylene (TCE) at a concentration of 100 mg/L was placed on the bottom of the container to a height of 30 cm; then, an unsaturated zone soil 23 (water content, 15%; sandy soil) made of the normal uncontaminated soil was piled in a thickness of 30 cm; the soil 23 in turn was overlaid with a layer of iron powder 24 (weight ratio, 1.0%; water content, 10%) in a thickness of about 1 cm; finally, a heap of the normal uncontaminated soil 25 was applied in a thickness of 20 cm to prepare the column 21. The iron powder was a spongy one having a carbon content of 0.3 wt%, with such a particle size that at least 50 wt% of the particles passed a 150 µm sieve, and a specific surface area of about 2,000 cm²/g.

From the top of the column 21, a tubular column b long enough to reach its bottom was inserted and air was continuously supplied through this column at a rate of 100 ml/min. The top of the column was left open and fitted with a balloon which, for analytical purposes, recovered the same volume of a gas as the supplied air. This was necessary to adjust the test system to satisfy constant-pressure, sealed conditions.

For concentration analysis, water samples were taken from the saturated zone 22 at a height of 5 cm from the bottom of the column and soil samples were taken from the unsaturated zone 23 at a height of 40 cm from the bottom; these samples as well as the sampled gas in the balloon were subjected to analysis with a gas chromatograph/mass spectrometer (HP-5973) of Hewlett-Packard. Analysis of the soil samples was conducted in accordance with the soil elution test procedure specified in Notification No. 46 of the Environmental Agency; the test was continued for 5 days and sampling was done 5 days after the commencement of the test.

The results of the experiment are shown in Table 21 under Test No. 1. Obviously, when air was continuously supplied from the bottom of the column, TCE was little detected in the water samples from the saturated zone 22 initially contaminated with 100 mg/L of TCE and only very small quantities of TCE were found in the water eluted from the soil in the unsaturated zone 23. The soil gas evolving from the top of the column was also found to contain a small quantity of TCE, showing that upon sparging with a gas such as air, TCE transferred to the vapor phase, adsorbed on the surfaces of the iron particles and then degraded. The gas recovered from the test system was found to contain ethylene gas which is believed to have evolved from the degraded TCE.

### [Example 18]

A column was prepared using the same container and soil composition as were employed in Example 17 (see Fig. 15). Nitrogen gas rather than air was continuously supplied via a tubular column under the same conditions as in Example 17.

The results are shown in Table 21 under Test No. 2; in 5 days after the start of the experiment, TCE became hardly detectable in the water samples from the saturated zone 22 and the water eluted from the soil in the unsaturated zone 23; an extremely small quantity of TCE was detected in the soil gas from the top of the column; it was therefore clear that TCE had been adequately degraded and removed.

It should be mentioned here that in Example 17 where air was supplied into the column of soil, a post-test analysis revealed that the iron powder layer 24 on top of the unsaturated zone 23 had been oxidized to be inactive.

**Table 21.**

| Test No. | Supplied gas | Iron powder layer | TCE concentration | | |
|---|---|---|---|---|---|
| | | | Soil gas (ppm) | Eluted water (mg/l) | Water sample (mg/l) |
| Example | | | | | |
| 17 | air | Present | 4.2 | 0.86 | 0.01 |
| 18 | N₂ | present | 1.1 | 0.02 | 0.01 |

| Com. Ex. | | | | | |
|---|---|---|---|---|---|
| h | - | Present | 16.2 | 2.4 | 72 |
| i | - | - | 380 | 10.4 | 78 |
| j | N₂ | - | 430 | 13 | 0.65 |

### [Comparative Example h]

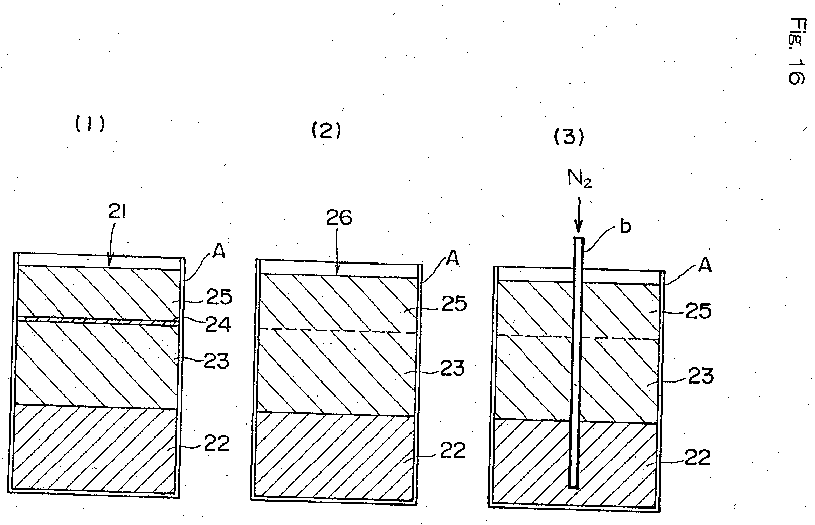

As shown in Fig. 16(1), container A of the same type as used in Example 18 was filled with a column 21 of the same soil composition that consisted of a contaminated soil in saturated zone 22, a soil in unsaturated zone 23, an iron powder layer 24 and a heap of soil 25. An experiment was conducted under the same conditions except that no gas was blown into the soil system via a tubular column.

The results are shown in Table 21 under Test No. h. Since only small quantities of TCE were detected from those portions of the unsaturated zone 23 and the top of the column which were bridged by the iron powder layer 24, the TCE degrading effect was clearly achieved by the iron powder layer 24. On the other hand, the water samples from the saturated zone 22 were found to contain TCE even when 5 days passed from the start of the experiment. It is therefore clear that without continuous supply of a gas into the contaminated groundwater in the saturated zone 22, the iron powder layer 24 alone is not advantageous for the cleaning of the soil in the saturated zone 22 since it takes an unduly prolonged time.

### [Comparative Example i]

As shown in Fig. 16(2), container A of the same type as used in Example 18 was filled with a TCE-contaminated saturated zone 22 in the bottom to a thickness of 30 cm, a non-contaminated unsaturated zone 23 in the middle to a thickness of 30 cm, and a heap of uncontaminated soil 25 on the top to a thickness of 20 cm; the resulting soil column 26 had no layer of iron powder. The thus prepared column was left as such for 5 days and, thereafter, the profile of TCE concentration in the depth direction was investigated.

The results are shown in Table 21 under Test No. i. When the soil column was left as such after its preparation, TCE was continuously detectable in the water samples from the saturated zone 22 initially contaminated with 100 mg/L of TCE; in addition, a high concentration of TCE was detected in the soil gas from the top of the column. Taken as a whole, the concentration of TCE hardly decreased and it would continue to diffuse through the column for a prolonged period of time.

### [Comparative Example j]

As shown in Fig. 16(3), container A of the same type as used in Example 18 was filled with a column having the same soil composition as Comparative Example i which consisted of a saturated zone 22, an unsaturated zone 23 and a heap of soil 25. A tubular column b was inserted into the soil column from the top to the bottom and nitrogen gas was continuously supplied through the tubular column b. The results of 5-day supply of nitrogen gas are shown in Table 21 under Test No. j.

When nitrogen gas continuously supplied into the soil composition having no layer of iron powder, the TCE concentration in the saturated zone 22 at the bottom of the column decreased to an almost undetectable level; on the other hand, the TCE concentration in the soil gas from the top of the column was so high that TCE would not be degraded but discharged as such into air atmosphere.

### Industrial Applicability

As described on the foregoing pages, the method of the present invention according to its embodiment can treat soils that are contaminated by chlorinated organic compounds and which have been difficult to treat by the conventional technology. The soils that can be treated by the invention include not only the soil in the saturated zone below the groundwater level but also the soil in the unsaturated zone above said level, as well as excavated soils. In the method of this invention, an iron powder that is restricted in carbon content, particle shape and size is added to soils in a restricted amount; the method is fairly inexpensive and can be implemented at ordinary temperatures by a convenient means of adding and mixing an iron powder alone in a smaller quantity than in the prior art and, as a result, contaminants can be degraded within a short time to such a state that they are harmless and have no environmental impacts. This advantage is attained by using a spongy iron powder and/or a copper-containing iron powder.

According to the preferred second embodiment of the invention, soils contaminated by chlorinated organic compounds can be cleaned with the iron powder at a significantly high speed as demonstrated in Example 2.

According to the preferred third embodiment of the invention, the contaminated soil is heated during cleaning and this further increases the speed of cleaning the soil with the iron powder.

According to the preferred fourth embodiment of the invention, the contaminated soil and the iron powder are mixed uniformly and this facilitates the cleaning of the soil.

According to the preferred fifth embodiment, a reagent such as the iron powder need not be mixed uniformly with the contaminated soil and it can be cleaned irrespective of whether it is treated *in situ* or an excavated soil or whether it is in the saturated or unsaturated zone; this contributes to greatly facilitate the step of mixing and dispersing the reagent in the soil, thus enabling the cleaning of the contaminated soil to be implemented at low cost. Dispersing of the reagent can be assisted by various means; if a sheet-like mixed and agitated phase is applied, the step of dispersing the reagent is greatly simplified and efficient treatment can be achieved on soils that are contaminated to small degree but over an extensive area; if a columnar mixed and agitated phase is applied, efficient treatment can be achieved on soils that are contaminated to high degree as in a contamination source and which are located deep in the ground and, in addition, the step of dispersing the reagent is greatly simplified; if a sheet-like mixed and agitated phase is combined with a columnar mixed and agitated phase, a contaminated soil in an extensive area including a contamination source can be cleaned efficiently by dispersing the reagent in a simplified manner; if the sheet-like mixed and agitated phase is applied in superposed layers, soils that are contaminated to high degree as in a contamination source and which are located deep in the ground can be cleaned efficiently by dispersing the reagent in a simplified manner. Excavated contaminated soils can be cleaned by similar simple steps of applying various means for dispersing the reagent in the soil. If mixed and agitated phages are spaced apart by distances of 0.05 - 5 m, adequate soil cleaning can be accomplished even if the reagent is not uniformly mixed with the soil or if it is distant from the contaminant.

According to the preferred sixth or seventh embodiment of the invention, the following advantages are attained: (1) if a gas is injected to the neighborhood of a contamination source in the ground with an iron powder mixed and agitated phase being preliminarily placed near the contaminated area, the injected gas causes the underground contaminant to move over an extensive area including the contamination source and, as a result, the reaction with the iron powder mixed and agitated phase is promoted to realize efficient cleaning of the contaminated soil; (2) if a gas is released into the contamination source in the saturated zone, with an iron powder mixed and agitated phase being preliminarily placed near the contaminated area, the contaminant dispersed or stagnant in the saturated zone is fluidized to move, for example, into the unsaturated zone and, what is more, the iron powder mixed and agitated phase placed near the contaminated area, for example, in the overlying layer further increases the efficiency of degrading the chlorinated organic compound which is present as the contaminant in the soil; (3) if the iron powder is added in an amount of 0.1 - 10 wt% and if the iron mixed and agitated phase is applied in at least one single layer having a thickness of at least 1 cm and/or as at least one column having a diameter of at least 1 cm, cleaning of the contaminated soil can be performed in an efficient and economical way; (4) if an inert or reducing gas is injected into the ground, oxygen is removed from the soil and a reducing atmosphere is created in the soil, improving the ability of the iron powder to degrade the contaminant; and (5) if nitrogen gas having a purity of 98% or more is used as the inert gas, a reducing atmosphere can be created at comparatively low cost to improve the degrading ability of the iron powder.

## Claims

1. A method for remediation of contaminated soils by which a soil contaminated by a chlorinated organic compound and having a water content of at least 5% that is located either deeper or shallower than the groundwater level or a soil contaminated by a chlorinated organic compound and having a water content of at least 5% which has been excavated is cleaned by allowing an iron powder to be present either within or near said soil so that it degrades said chlorinated organic compound, **characterized in that** said iron powder is selected from at least one of a spongy iron powder and a copper-containing iron powder, whereby the spongy iron powder contains at least 0.1 wt% of carbon, has a specific surface area of at least 500 cm²/g with such a particle size that at least 50% of the particles pass a sieve of 150 µm and 0.1-10 wt% of said spongy iron powder is allowed to be present either within or near said soil, and the copper-containing iron powder, which is prepared by recovering a precipitate resulting from mixing an iron powder in an aqueous solution of copper sulfate, has a copper content in the range of 0.1 - 20 wt% and 0.1 - 10 wt% of such copper-containing iron powder is allowed to be present either within or near said soil.

2. The method according to claim 1, wherein a reducing substance that is water-soluble and which exhibits weak acidity in water is added together with said iron powder as it is allowed to be present either within or near said soil.

3. The method according to claim 2, wherein said reducing substance that is water-soluble and which exhibits weak acidity in water is selected from among inorganic compounds excepting those containing at least one of nitrogen and phosphorus and added to said soil in an amount of at least 100 ppm.

4. The method according to claim 2 or 3, wherein said reducing substance that is water-soluble and which exhibits weak acidity in water is at least one compound selected from the group consisting of sodium hydrogensulfite, sodium disulfite and sodium dithlonite.

5. The method according to any one of claims 1 - 4, wherein said chlorinated organic compound is degraded at a pH in the range of 3.5 - 9.

6. The method according to any one of claims 1 - 5, wherein when said chlorinated organic compound is degraded, heat is imparted to said soil so that it has a higher temperature than its natural temperature.

7. The method according to claim 6, wherein heat is imparted to said soil by utilizing at least one means selected from among the heat of chemical reaction of an inorganic compound, a heating medium and Joule's heat.

8. The method according to any one of claims 1 - 7, wherein said chlorinated organic compound is at least one member selected from the group consisting of dichloromethane, chloroform, carbon tetrachloride, 1,1-dichloroethane, 1,2-dichloroethane, methylchloroform, 1,1,2-trichloroethane, 1,1,1,2-tetrachloroethane, 1,1,2,2-tetrachloroethane, 1,1-dichloroethylene, cis-1,2-dichloroethylene, trans-1,2-dichloroethylene, trichloroethylene, tetrachloroethylene, 1,3-dichloropropene and 1,3-dichloropropene.

9. The method according to any one of claims 1 - 8, wherein either said spongy iron powder or said copper-containing iron powder or both are uniformly mixed with said soil.

10. The method according to any one of claims 1 - 8, wherein either said spongy Iron powder or said copper-containing iron powder or both are not mixed uniformly with said soil but are dispersed in the ground near said soil.

11. The method according to claim 10, wherein either said spongy iron powder or said copper-containing iron powder or both are dispersed by means of applying a sheet-like phase in which either said spongy iron powder or said copper-containing iron powder or both are mixed with the soil under agitation, whereby said sheetlike phase may be parallel, normal or at an angle to the ground surface.

12. The method according to claim 10, wherein either said spongy iron powder or said copper-containing iron powder or both are dispersed by a means of applying a columnar phase in which either said spongy iron powder or said copper-containing iron powder or both are mixed with the soil under agitation, whereby said columnar phase may be parallel, normal or at an angle to the ground surface.

13. The method according to claim 10, wherein either said spongy iron powder or said copper-containing iron powder or both are dispersed by a means of applying in combination a sheet-like phase in which either said spongy iron powder or said copper-containing iron powder or both are mixed with the soil under agitation and a columnar phase in which said spongy iron powder or said copper-containing iron powder or both are mixed with the soil under agitation.

14. The method according to claims 11 or 13, wherein said sheet-like phase is applied in a plurality of layers.

15. The method according to any one of claims 11 - 14, wherein said sheet-like phase and said columnar phase are each applied in a plurality of locations that are spaced apart by a distance of 0.05 - 5 m.

16. The method according to claim 10, by which a soil with a water content of at least 5% that is located either deeper or shallower than the groundwater level and that is contaminated by a chlorinated organic compound is cleaned in situ by blowing a gas in to or near a contaminated area so that said contaminant is moved at an accelerated rate and degraded with an iron powder mixed and agitated phase that is preliminarily placed in or near the contaminated area.

17. The method according to claim 10, by which a soil with a water content of at least 5% that is located either deeper or shallower than the groundwater level and that is contaminated by a chlorinated organic compound Is cleaned in situ in a saturated zone by blowing a gas into or near a contaminated area so that said contaminant is moved at an accelerated rate and degraded with an iron powder mixed and agitated phase that is preliminarily placed in or near the contaminated area.

18. The method according to claim 16 or 17, wherein said iron powder mixed and agitated phase consists of at least one single layer in a thickness of at least 1 cm.

19. The method according to claim 16 or 17, wherein said iron powder mixed and agitated phase consists of at least one single column in a diameter of at least 1 cm.

20. The method according to claim 16 or 17, wherein said iron powder mixed and agitated phase consists of at least one single layer in a thickness of at least 1 cm and at least one single column in a diameter of at least 1 cm.

21. The method according to any one of claims 16 - 20, wherein said gas has a lower oxygen content than air.

22. The method according to any one of claims 16 - 20, wherein nitrogen gas with a purity of at least 98% is used as said gas.

## Patentansprüche

1. Verfahren für die Sanierung von verunreinigten Böden, wodurch ein Boden, der durch eine chlorierte organische Verbindung verunreinigt ist und einen Wassergehalt von mindestens 5 % aufweist, der sich entweder tiefer oder weniger tief als das Grundwasserniveau befindet, oder ein Boden, der durch eine chlorierte organische Verbindung verunreinigt ist und einen Wassergehalt von mindestens 5 % aufweist, der ausgegraben worden ist, durch Gestatten, dass ein Eisenpulver entweder innerhalb oder in der Nähe des Bodens vorliegt, so dass es die chlorierte organische Verbindung abbaut, gereinigt wird, **dadurch gekennzeichnet, dass** das Eisenpulver von mindestens einem von einem schwammigen Eisenpulver und einem kupferhaltigen Eisenpulver ausgewählt wird, wobei das schwammige Eisenpulver mindestens 0,1 Gew.-% Kohlenstoff enthält, einen spezifischen Oberflächenbereich von mindestens 500 cm²/g bei einer derartigen Teilchengröße aufweist, dass mindestens 50 % der Teilchen durch ein Sieb von 150 µm hindurchgehen, und gestattet wird, dass 0,1 - 10 Gew.-% des schwammigen Eisenpulvers entweder innerhalb oder in der Nähe des Bodens vorliegen, und das kupferhaltige Eisenpulver, das durch Gewinnen eines Präzipitats hergestellt wird, das aus dem Mischen eines Eisenpulvers in eine wässrige Lösung von Kupfersulfat resultiert, einen Kupfergehalt im Bereich von 0,1 - 20 Gew.-% aufweist und gestattet wird, dass 0,1 - 10 Gew.-% eines derartigen kupferhaltigen Eisenpulvers entweder innerhalb oder in der Nähe des Bodens vorliegen.

2. Verfahren nach Anspruch 1, wobei ein Reduktionsmittel, das wasserlöslich ist und in Wasser eine geringe Azidität aufweist, zusammen mit dem Eisenpulver zugegeben wird, während es ihm gestattet wird, entweder innerhalb oder in der Nähe des Bodens vorzuliegen.

3. Verfahren nach Anspruch 2, wobei das Reduktionsmittel, das wasserlöslich ist und das in Wasser eine geringe Azidität aufweist, unter anorganischen Verbindungen ausgewählt wird, mit Ausnahme derjeniger, die Stickstoff und/oder Phosphor enthalten, und dem Boden in einer Menge von mindestens 100 ppm zugegeben wird.

4. Verfahren nach Anspruch 2 oder 3, wobei das Reduktionsmittel, das wasserlöslich ist und das in Wasser eine geringe Azidität aufweist, mindestens eine Verbindung ist ausgewählt aus der Gruppe bestehend aus Natriumhydrogensulfit, Natriumdisulfit und Natriumdithionit.

5. Verfahren nach einem der Ansprüche 1 - 4, wobei die chlorierte organische Verbindung bei einem pH-Wert im Bereich von 3,5 - 9 abgebaut wird.

6. Verfahren nach einem der Ansprüche 1 - 5, wobei, wenn die chlorierte organische Verbindung abgebaut worden ist, Wärme auf den Boden aufgebracht wird, so dass er eine höhere Temperatur als seine natürliche Temperatur aufweist.

7. Verfahren nach Anspruch 6, wobei Wärme auf den Boden durch Benutzen mindestens eines Mittels aufgebracht wird ausgewählt unter der Wärme der chemischen Reaktion einer anorganischen Verbindung, einem Erwärmungsmedium und Joulescher Wärme.

8. Verfahren nach einem der Ansprüche 1 - 7, wobei die chlorierte organische Verbindung mindestens ein Mitglied ist ausgewählt aus der Gruppe bestehend aus Dichlormethan, Chloroform, Tetrachlorkohlenstoff, 1,1-Dichlorethan, 1,2-Dichlorethan, Methylchloroform, 1,1,2-Trichlorethan, 1,1,1,2-Tetrachlorethan, 1,1,2,2-Tetrachlorethan, 1,1-Dichlorethylen, cis-1,2-Dichlorethylen, trans-1,2-Dichlorethylen, Trichlorethylen, Tetrachlorethylen, 1,3-Dichlorpropen und 1,3-Dichlorpropan.

9. Verfahren nach einem der Ansprüche 1 - 8, wobei entweder das schwammige Eisenpulver oder das kupferhaltige Eisenpulver oder beide gleichförmig mit dem Boden gemischt werden.

10. Verfahren nach einem der Ansprüche 1 - 8, wobei entweder das schwammige Eisenpulver oder das kupferhaltige Eisenpulver oder beide nicht gleichförmig mit dem Boden gemischt werden, sondern in der Erde in der Nähe des Bodens dispergiert werden.

11. Verfahren nach Anspruch 10, wobei entweder das schwammige Eisenpulver oder das kupferhaltige Eisenpulver oder beide durch Aufbringen einer plattenartigen Phase dispergiert werden, in der entweder das schwammige Eisenpulver oder das kupferhaltige Eisenpulver oder beide mit dem Boden unter Bewegen gemischt werden, wobei die plattenartige Phase parallel, normal oder in einem Winkel zur Bodenoberfläche liegen kann.

12. Verfahren nach Anspruch 10, wobei entweder das schwammige Eisenpulver oder das kupferhaltige Eisenpulver oder beide durch Aufbringen einer säulenartigen Phase dispergiert werden, in der entweder das schwammige Eisenpulver oder das kupferhaltige Eisenpulver oder beide mit dem Boden unter Bewegen gemischt werden, wobei die säulenartige Phase parallel, normal oder in einem Winkel zur Bodenoberfläche liegen kann.

13. Verfahren nach Anspruch 10, wobei entweder das schwammige Eisenpulver oder das kupferhaltige Eisenpulver oder beide durch Aufbringen, in Kombination, einer plattenartigen Phase, in der entweder das schwammige Eisenpulver oder das kupferhaltige Eisenpulver oder beide mit dem Boden unter Bewegen gemischt werden, und einer säulenartigen Phase, in der das schwammige Eisenpulver oder das kupferhaltige Eisenpulver oder beide mit dem Boden unter Bewegen gemischt werden, dispergiert werden.

14. Verfahren nach Anspruch 11 oder 13, wobei die plattenartige Phase als mehrere Schichten aufgebracht wird.

15. Verfahren nach einem der Ansprüche 11 - 14, wobei die plattenartige Phase und die säulenartige Phase jeweils an mehreren Stellen aufgebracht werden, die durch eine Entfernung von 0,05 bis 5 m beabstandet sind.

16. Verfahren nach Anspruch 10, wodurch ein Boden mit einem Wassergehalt von mindestens 5 %, der sich entweder tiefer oder weniger tief als das Grundwasserniveau befindet und der durch eine chlorierte organische Verbindung verunreinigt ist, in situ durch Blasen eines Gases in einen oder in die Nähe eines verunreinigten Bereichs, so dass die Verunreinigung mit beschleunigter Geschwindigkeit bewegt und mit mit einem Eisenpulver gemischter und bewegter Phase abgebaut wird, die einleitend in oder in die Nähe des verunreinigten Bereichs eingebracht wird, gereinigt wird.

17. Verfahren nach Anspruch 10, wobei ein Boden mit einem Wassergehalt von mindestens 5 %, der sich entweder tiefer oder weniger tief als das Grundwasserniveau befindet und der durch eine chlorierte organische Verbindung verunreinigt ist, in situ in einer gesättigten Zone durch Blasen eines Gases in einen oder in die Nähe eines verunreinigten Bereichs, so dass die Verunreinigung mit beschleunigter Geschwindigkeit bewegt und mit mit einem Eisenpulver gemischter und bewegter Phase abgebaut wird, die einleitend in oder in die Nähe des verunreinigten Bereichs eingebracht wird, gereinigt wird.

18. Verfahren nach Anspruch 16 oder 17, wobei die mit einem Eisenpulver gemischte und bewegte Phase aus mindestens einer einzigen Schicht in einer Dicke von mindestens 1 cm besteht.

19. Verfahren nach Anspruch 16 oder 17, wobei die mit einem Eisenpulver gemischte und bewegte Phase aus mindestens einer einzigen Säule mit einem Durchmesser von mindestens 1 cm besteht.

20. Verfahren nach Anspruch 16 oder 17, wobei die mit einem Eisenpulver gemischte und bewegte Phase aus mindestens einer einzigen Schicht in einer Dicke von mindestens 1 cm und aus mindestens einer einzigen Säule mit einem Durchmesser von mindestens 1 cm besteht.

21. Verfahren nach einem der Ansprüche 16 - 20, wobei das Gas einen geringeren Sauerstoffgehalt als Luft aufweist.

22. Verfahren nach einem der Ansprüche 16 - 20, wobei Stickstoffgas mit einer Reinheit von mindestens 98 % als das Gas verwendet wird.

## Revendications

1. Procédé de réhabilitation de sols contaminés par lequel un sol contaminé par un composé organique chloré et ayant une teneur en eau d'au moins 5 % qui est situé à un niveau plus profond ou moins profond que le niveau de l'eau souterraine ou un sol contaminé par un composé organique chloré et ayant une teneur en eau d'au moins 5 % qui a été excavé est nettoyé en laissant une poudre de fer être présente dans ou à proximité dudit sol de sorte qu'elle dégrade ledit composé organique chloré, **caractérisé en ce que** ladite poudre de fer est choisie parmi au moins l'un d'une poudre de fer spongieuse et une poudre de fer contenant du cuivre, où la poudre de fer spongieuse contient au moins 0,1 % en poids de carbone, a une surface spécifique d'au moins 500 cm²/g avec une taille de particule telle qu'au moins 50 % des particules traversent un tamis de 150 µm et 0,1 à 10 % en poids de ladite poudre de fer spongieuse est laissée présente dans ou à proximité dudit sol, et la poudre de fer contenant du cuivre, qui est préparée par récupération d'un précipité résultant du mélange d'une poudre de fer dans une solution aqueuse de sulfate de cuivre, a une teneur en cuivre dans la plage de 0,1 à 20 % en poids et de 0,1 à 10 % en poids d'une telle poudre de fer contenant du cuivre est laissée présente dans ou à proximité dudit sol.

2. Procédé selon la revendication 1, dans lequel une substance réductrice qui est soluble dans l'eau et qui présente une acidité faible dans l'eau est ajoutée conjointement avec ladite poudre de fer lorsqu'elle est laissée présente dans ou à proximité dudit sol.

3. Procédé selon la revendication 2, dans lequel ladite substance réductrice qui est soluble dans l'eau et qui présente une acidité faible dans l'eau est choisie parmi des composés inorganiques à l'exception de ceux contenant au moins l'un de l'azote et du phosphore et ajoutée audit sol en une quantité d'au moins 100 ppm.

4. Procédé selon la revendication 2 ou 3, dans lequel ladite substance réductrice qui est soluble dans l'eau et qui présente une acidité faible dans l'eau est au moins un composé choisi dans le groupe constitué de l'hydrogénosulfite de sodium, le bisulfite de sodium et le dithionite de sodium.

5. Procédé selon l'une quelconque des revendications 1 à 4, dans lequel ledit composé organique chloré est dégradé à un pH dans la plage de 3,5 à 9.

6. Procédé selon l'une quelconque des revendications 1 à 5, dans lequel, lorsque ledit composé organique chloré est dégradé, de la chaleur est appliquée audit sol de sorte qu'il ait une température plus élevée que sa température naturelle.

7. Procédé selon la revendication 6, dans lequel le chauffage est appliqué audit sol par utilisation d'au moins un moyen choisi parmi la chaleur d'une réaction chimique d'un composé inorganique, un milieu chauffant et l'effet Joule.

8. Procédé selon l'une quelconque des revendications 1 à 7, dans lequel ledit composé organique chloré est au moins un membre choisi dans le groupe constitué des dichlorométhane, chloroforme, tétrachlorure de carbone, 1,1-dichloroéthane, 1,2-dichloroéthane, méthylchloroforme, 1,1,2-trichloroéthane, 1,1,1,2-tétrachloroéthane, 1,1,2,2-tétrachloroéthane, 1,1-dichloroéthylène, cis-1,2-dichloroéthylène, trans-1,2-dichloroéthylène, trichloroéthylène, tétrachloroéthylène, 1,3-dichloropropène et 1,3-dichloropropane.

9. Procédé selon l'une quelconque des revendications 1 à 8, dans lequel ladite poudre de fer spongieuse ou ladite poudre de fer contenant du cuivre ou les deux sont uniformément mélangées avec ledit sol.

10. Procédé selon l'une quelconque des revendications 1 à 8, dans lequel ladite poudre de fer spongieuse ou ladite poudre de fer contenant du cuivre ou les deux ne sont pas mélangées uniformément avec ledit sol, mais sont dispersées dans la terre à proximité dudit sol.

11. Procédé selon la revendication 10, dans lequel ladite poudre de fer spongieuse ou ladite poudre de fer contenant du cuivre ou les deux sont dispersées au moyen de l'application d'une phase de type feuille dans laquelle ladite poudre de fer spongieuse ou ladite poudre de fer contenant du cuivre ou les deux sont mélangées avec le sol sous agitation, de sorte que ladite phase de type feuille puisse être parallèle, normale ou à un angle par rapport à la surface du sol.

12. Procédé selon la revendication 10, dans lequel ladite poudre de fer spongieuse ou ladite poudre de fer contenant du cuivre ou les deux sont dispersées au moyen de l'application d'une phase colonnaire dans laquelle ladite poudre de fer spongieuse ou ladite poudre de fer contenant du cuivre ou les deux sont mélangées avec le sol sous agitation, où ladite phase colonnaire peut être parallèle, normale ou à un angle par rapport à la surface du sol.

13. Procédé selon la revendication 10, dans lequel ladite poudre de fer spongieuse ou ladite poudre de fer contenant du cuivre ou les deux sont dispersées au moyen de l'application en combinaison d'une phase de type feuille dans laquelle ladite poudre de fer spongieuse ou ladite poudre de fer contenant du cuivre ou les deux sont mélangées avec le sol sous agitation et une phase colonnaire dans laquelle ladite poudre de fer spongieuse ou ladite poudre de fer contenant du cuivre ou les deux sont mélangées avec le sol sous agitation.

14. Procédé selon les revendications 11 ou 13, dans lequel ladite phase de type feuille est appliquée dans une pluralité de couches.

15. Procédé selon l'une quelconque des revendications 11 à 14, dans lequel ladite phase de type feuille et ladite phase colonnaire sont chacune appliquées à une pluralité d'emplacements qui sont espacés d'une distance de 0,05 à 5 m.

16. Procédé selon la revendication 10, par lequel un sol ayant une teneur en eau d'au moins 5 % qui est situé à un niveau plus profond ou moins profond que le niveau de l'eau souterraine et qui est contaminé par un composé organique chloré est nettoyé *in situ* par soufflage d'un gaz dans ou à proximité d'une zone contaminée de sorte que ledit contaminant soit déplacé à un taux accéléré et dégradé avec une phase mélangée et agitée de poudre de fer qui est préalablement placée dans ou à proximité de la zone contaminée.

17. Procédé selon la revendication 10, par lequel un sol ayant une teneur en eau d'au moins 5 % qui est situé à un niveau plus profond ou moins profond que le niveau de l'eau souterraine et qui est contaminé par un composé organique chloré est nettoyé *in situ* dans une zone saturée par soufflage d'un gaz dans ou à proximité d'une zone contaminée de sorte que ledit contaminant soit déplacé à un taux accéléré et dégradé avec une phase mélangée et agitée de poudre de fer qui est préalablement placée dans ou à proximité de la zone contaminée.

18. Procédé selon la revendication 16 ou 17, dans lequel ladite phase mélangée et agitée de poudre de fer est constituée d'au moins une couche unique ayant une épaisseur d'au moins 1 cm.

19. Procédé selon la revendication 16 ou 17, dans lequel ladite phase mélangée et agitée de poudre de fer est constituée d'au moins une colonne unique ayant un diamètre d'au moins 1 cm.

20. Procédé selon la revendication 16 ou 17, dans lequel ladite phase mélangée et agitée de poudre de fer est constituée d'au moins une couche unique ayant une épaisseur d'au moins 1 cm et d'au moins une colonne unique ayant un diamètre d'au moins 1 cm.

21. Procédé selon l'une quelconque des revendications 16 à 20, dans lequel ledit gaz a une teneur en oxygène plus faible que l'air.

22. Procédé selon l'une quelconque des revendications 16 à 20, dans lequel du gaz d'azote ayant une pureté d'au moins 98 % est utilisé en tant que ledit gaz.
